(19) **Europäisches Patentamt**
**European Patent Office**
**Office européen des brevets**

(11) **EP 3 918 516 B1**

(12) **EUROPÄISCHE PATENTSCHRIFT**

(45) Veröffentlichungstag und Bekanntmachung des Hinweises auf die Patenterteilung:
**20.08.2025 Patentblatt 2025/34**

(21) Anmeldenummer: **20710039.7**

(22) Anmeldetag: **28.01.2020**

(51) Internationale Patentklassifikation (IPC):
**G06V 20/52** *(2022.01)* **G06V 20/64** *(2022.01)*
**G07C 9/30** *(2020.01)*

(52) Gemeinsame Patentklassifikation (CPC):
**G07C 9/30; G06V 20/52; G06V 20/64**

(86) Internationale Anmeldenummer:
**PCT/EP2020/051965**

(87) Internationale Veröffentlichungsnummer:
**WO 2020/157024 (06.08.2020 Gazette 2020/32)**

(54) **VERFAHREN UND SYSTEM ZUR ÜBERWACHUNG EINES RAUMBEREICHS IN EINER PERSONENSCHLEUSE**

METHOD AND SYSTEM FOR MONITORING A SPATIAL REGION IN A PERSONNEL AIRLOCK

PROCÉDÉ ET SYSTÈME POUR SURVEILLER UNE ZONE SPATIALE DANS UN SAS POUR PERSONNES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.01.2019 DE 102019102051**

(43) Veröffentlichungstag der Anmeldung:
**08.12.2021 Patentblatt 2021/49**

(73) Patentinhaber: **Mühlbauer GmbH & Co. KG**
**93426 Roding (DE)**

(72) Erfinder:
• **NIEBLING, Gerhard**
**93053 Regensburg (DE)**
• **LEHMANN-ELLE, Ralf**
**09126 Chemnitz (DE)**
• **KUMAR, Deepak**
**93426 Roding (DE)**

(74) Vertreter: **Platzöder Patentanwaltsgesellschaft mbH**
**Inselkammerstraße 10**
**82008 Unterhaching (DE)**

(56) Entgegenhaltungen:
• **DUMOULIN JOEL ET AL: "UNICITY: A depth maps database for people detection in security airlocks", 2018 15TH IEEE INTERNATIONAL CONFERENCE ON ADVANCED VIDEO AND SIGNAL BASED SURVEILLANCE (AVSS), IEEE, 27 November 2018 (2018-11-27), pages 1 - 6, XP033518252, DOI: 10.1109/AVSS.2018.8639152**
• **VILLAMIZAR M ET AL: "WatchNet: Efficient and Depth-based Network for People Detection in Video Surveillance Systems", 2018 15TH IEEE INTERNATIONAL CONFERENCE ON ADVANCED VIDEO AND SIGNAL BASED SURVEILLANCE (AVSS), IEEE, 27 November 2018 (2018-11-27), pages 1 - 6, XP033518218, DOI: 10.1109/ AVSS.2018.8639165**

**Beschreibung**

Die vorliegende Erfindung betrifft ein Verfahren und ein System zur Überwachung eines Raumbereichs in einer Personenschleuse, insbesondere zur Personenvereinzelungsüberwachung bezüglich des Raumbereichs, sowie eine mit einem solchen System ausgerüstete Personenschleuse und ein zur Ausführung des Verfahrens konfiguriertes Computerprogramm.

Personenschleusen werden insbesondere dazu eingesetzt, Zugangskontrollen zu zugangsbeschränkten Räumen oder Flächen zu implementieren, beispielsweise im Rahmen von Zugangskontrollen für ticketpflichtige Bereiche, wie etwa Veranstaltungsgelände oder Bahnsteige, oder für Sicherheitsbereiche von Flughäfen, Industrie- oder Kraftwerksanlagen oder Forschungslabors. Ein wesentlicher Aspekt vieler Personenschleusen, insbesondere von automatisierten Durchgangsschleusen, ist die Vereinzelung, d.h. die Überwachung und Sicherstellung dahingehend, dass nur jeweils eine Person gleichzeitig in der Schleuse abgefertigt wird und sich nicht eine oder mehrere weitere Personen unberechtigt zusammen mit der ersten Person Durchgang durch die Personenschleuse verschafft bzw. verschaffen (Personenvereinzelungsüberwachung). In vielen Fällen weisen Personenschleusen einen abschließbaren Raumbereich auf, in dem die Abfertigung, insbesondere Authentifizierung, einer durchzuschleusenden Person erfolgt. Der Raumbereich kann insbesondere mittels einer oder mehreren, insbesondere mittels zwei Türen Türenpaaren abschließbar sein, wobei in der Regel eine Tür bzw. ein Türenpaar als abschließbarer Zugang und eine weitere Tür bzw. ein weiteres Türenpaar als abschließbarer Ausgang aus dem Raumbereich vorgesehen ist.

Des Weiteren besteht eine im Zusammenhang mit einer solchen Personenvereinzelungsüberwachung zu lösende Herausforderung insbesondere darin, auch dann eine zuverlässige Unterscheidung zwischen einer einzelnen Person im Raumbereich und einer Mehrzahl von Personen im Raumbereich treffen zu können, wenn sich neben der einen bzw. den mehreren Personen weitere Objekte, beispielsweise Reisegepäck oder mitgeführte Ausrüstungsgegenstände, im Raumbereich der Personenschleuse befinden.

Das Dokument DUMOULIN JOEL ET AL: "UNICITY: A depth maps database for people detection in security airlocks", 2018 15TH IEEE INTERNATIONAL CONFERENCE ON ADVANCED VIDEO AND SIGNAL BASED SURVEILLANCE (AVSS), IEEE, 27. November 2018 (2018-11-27), Seiten 1-6, betrifft ein System zur Bestimmung, ob sich eine oder mehrere Personen innerhalb einer Personenschleuse befinden. Hierzu sollen Tiefenkarten mittels Sensoren erfasst werden. Dabei soll ein Bildpunktwert eine Entfernung eines Objekts von einem Sensor repräsentieren. Weiterhin soll aus den Tiefenkarten die Summe aus Differenzwerten, wobei die Differenzwerte eine Höhe von Objekten zum Boden repräsentiert, bestimmt werden. Diese Summe soll proportional zu dem Volumen des jeweiligen Objekts in der Schleuse sein.

Der vorliegenden Erfindung liegt die Aufgabe zugrunde, eine möglichst zuverlässige und zugleich effiziente Lösung zur Überwachung eines Raumbereichs in einer Personenschleuse, insbesondere zum Zweck der Personenvereinzelungsüberwachung, anzugeben.

Die Lösung dieser Aufgabe wird gemäß der Lehre der unabhängigen Ansprüche erreicht. Verschiedene Ausführungsformen und Weiterbildungen der Erfindung sind Gegenstand der Unteransprüche.

Ein erster Aspekt der Erfindung betrifft ein computerimplementiertes Verfahren zur Überwachung eines Raumbereichs in einer Personenschleuse, insbesondere zur Personenvereinzelungsüberwachung bezüglich des Raumbereichs. Das Verfahren weist auf: (i) Empfangen von Bilddaten, die eine Mehrzahl von simultan und von unterschiedlichen Positionen im Bereich der Personenschleuse aus jeweils mittels eines zugehörigen an der entsprechenden Position angeordneten 3D-Bildsensors erfasste Tiefenbilder des Raumbereichs repräsentieren, wobei jedes der Tiefenbilder für jeden seiner Bildpunkte anhand eines diesem zugeordneten Bildpunktwerts eine räumliche Entfernung des darauf abgebildeten Objektes (Person oder Gegenstand) oder Objektabschnitts vom zugehörigen 3D-Bildsensor angibt; (ii) Berechnen, für jedes der Tiefenbilder, eines dem jeweiligen Tiefenbild zugeordneten charakteristischen Tiefenbildwerts auf Basis sämtlicher Bildpunktwerte oder einer Untermenge der einzelnen Bildpunktwerte des jeweiligen Tiefenbildes, durch Anwendung eines Mittelungsverfahrens; (iii) Berechnen eines Gesamtbildwerts durch Kombinieren der charakteristischen Tiefenbildwerte der verschiedenen Tiefenbilder gemäß einer vorbestimmten monotonen Kombinationsvorschrift, die insbesondere eine Summenbildung sein oder aufweisen kann, und wobei unter der monotonen Kombinationsvorschrift eine Kombinationsvorschrift zur Bestimmung eines Ergebniswerts aus einer Mehrzahl von Eingangswerten, vorliegend speziell Tiefenbildwerten, zu verstehen ist, die in dem Sinne eine Monotonieeigenschaft aufweist, dass der Ergebniswert entweder (i) stets größer oder gleich jedem der Eingangswerte oder alternativ (ii) stets kleiner oder gleich jedem der Eingangswerte ist, und wobei die Kombinationsvorschrift; und (iv) Bestimmen eines Schätzergebnisses für die Wahrscheinlichkeit, dass sich mehr als eine Person in dem Raumbereich befindet, in Abhängigkeit vom Ergebnis eines Vergleichs des Gesamtbildwerts mit zumindest einem vorbestimmten Referenzgesamtbildwert.

Unter einem ''3D-Bildsensor'' im Sinne der Erfindung ist ein Bildsensor, insbesondere eine Kameravorrichtung, zu verstehen, die eingerichtet ist, einen Raumbereich in drei räumlichen Dimensionen abzubilden und entsprechende Bilddaten zu liefern. Auch Bildsensoren, die anstelle einer gesamten räumlichen dreidimensionalen Bilddarstellung nur ein zweidimensionales Bild mit zusätzlicher Tiefeninformation liefern (oft als 2,5D-Sensoren bezeichnet), sind ''3D-Bildsensoren" im Sinne der Erfindung. Insbesondere gehören Stereokameras oder Time-of-Flight (TOF)-Kameras bzw. PMD-Kameras dazu.

Unter einem "Tiefenbild" im Sinne der Erfindung ist Bild in zwei räumlichen Dimensionen zu verstehen, dessen Bildpunkten jeweils ein Wert (Bildpunktwert) zugeordnet ist, der ein Maß für eine räumliche Entfernung des auf den Bildpunkt abgebildeten Objektes (Person oder Gegenstand) oder Objektabschnitts vom dem zur Erzeugung des Tiefenbilds dienenden 3D-Bildsensor entlang einer dritten räumlichen Dimension angibt. Ein Tiefenbild kann insbesondere ein Grauwertbild oder Farbwertbild sein, bei dem die Bildpunktwerte zu Grauwerten oder Farbwerten gemäß einer Grauwert- oder Farbwertskala korrespondieren, so dass der Grauwert bzw. Farbwert eines Bildpunktes ein Maß für die genannte räumliche Entfernung liefert.

Unter einem "charakteristischen Tiefenbildwert" ist ein dem betrachteten Tiefenbild zugeordneter Wert, der insbesondere ein Zahlenwert sein kann, zu verstehen, der aus Bildpunktwerten von Bildpunkten des Tiefenbilds, insbesondere von sämtlichen Bildpunktwerten oder von einer bestimmten Untermenge davon, abgeleitet ist und das Tiefenbild als Ganzes so charakterisiert, dass er grundsätzlich geeignet ist, verschiedene Tiefenbilder voneinander zu unterscheiden. "Grundsätzlich" bedeutet hier, dass in der überwiegenden Anzahl der Fälle, insbesondere in den allermeisten Fällen, eine solche Unterscheidung möglich ist, wenngleich eine echte Kollisionsresistenz in dem Sinne, dass es faktisch ausgeschlossen oder äußert unwahrscheinlich ist, dass zwei verschiedene Tiefenbilder dennoch zum gleichen Tiefenbildwert führen, nicht zwingend gefordert werden muss, aber kann.

Ein charakteristischer Tiefenbildwert wird unter Verwendung eines "Mittelungsverfahrens" bzw. durch "Mitteln" erzeugt.

Unter einem solchen Mittelungsverfahren ist vorliegend ein Verfahren zur Berechnung eines Mittelwerts (kurz auch nur "Mittel") zu verstehen. Ein Mittelwert ist dabei eine nach einer bestimmten Rechenvorschrift aus gegebenen Zahlen ermittelte weitere Zahl, die einen Kennwert für die zentrale Tendenz der Verteilung der gegebenen Zahlen repräsentiert. Insbesondere sind das Berechnen des arithmetischen Mittels, des geometrischen Mittels, des quadratischen Mittels, des kubischen Mittels, des harmonischen Mittels, des Modus und des Medians jeweils Mittelungsverfahren im Sinne der Erfindung.

Unter einer "monotonen Kombinationsvorschrift" im Sinne der Erfindung ist eine Kombinationsvorschrift zur Bestimmung eines Ergebniswerts aus einer Mehrzahl von Eingangswerten, vorliegend speziell Tiefenbildwerten, zu verstehen, die in dem Sinne eine Monotonieeigenschaft aufweist, dass der Ergebniswert entweder (i) stets größer oder gleich jedem der Eingangswerte oder alternativ (ii) stets kleiner oder gleich jedem der Eingangswerte ist. Die Kombinationsvorschrift kann insbesondere eine mathematische Rechenvorschrift sein. Insbesondere stellen die Summation von Zahlen gleichen Vorzeichens sowie die Multiplikation von Zahlen gleichen Vorzeichens und mit einem Betrag von zumindest Eins jeweils monotone Kombinationsvorschriften im Sinne der Erfindung dar. Entscheidend für die Abgrenzung des Begriffs ist, dass alle Eingangswerte den Ergebniswert in "dieselbe Richtung" beeinflussen oder im Falle eines bezüglich der Kombinationsvorschrift neutralen Werts (z.B. Null) für den jeweiligen Eingangswert unverändert lassen und somit ein gegenseitiger Verstärkungseffekt eintritt. Wenn beispielsweise ein erstes Tiefenbild eines ersten 3D-Bildsensors im Wesentlichen (d.h. bis auf als "Nicht-Personen" erkannte weitere Objekte, wie etwa Reisegepäck) nur eine erste Person in der Schleuse abbildet und ein zweites Tiefenbild eines zweiten, dem ersten gegenüberliegenden 3D-Bildsensors im Wesentlichen nur eine unmittelbar aus Sicht des ersten 3D-Bildsensors hinter und aus Sicht des zweiten 3D-Bildsensors vor der ersten Person stehende zweite Person im überwachten Raumbereich der Schleuse abbildet, dann muss der aus den Tiefenbildwerten der beiden Tiefenbilder mittels der Kombinationsvorschrift gebildete Ergebniswert grundsätzlich eine Differenzierung dieser Situation in der Personenschleuse von einer Situation, in der nur eine Person im überwachten Raumbereich der Personenschleuse anwesend ist, erlauben, was durch die Monotonieforderung erreicht wird.

Unter einem "Vergleich" mehrerer Werte, vorliegend des Gesamtbildwerts und zumindest eines vorbestimmten Referenzgesamtbildwerts, ist im Sinne der Erfindung eine Vorschrift zu verstehen, die insbesondere eine mathematische Rechenvorschrift sein kann, und (i) bei der das Ergebnis der Anwendung der Vorschrift eine Aussage dafür liefert, ob sich die Werte voneinander unterscheiden, und (ii) die ein Maß dafür liefert, wie stark sich die verglichenen Werte im Falle ihrer Ungleichheit voneinander unterscheiden. Gemäß einem einfachen Beispiel kann der Vergleich zweier Zahlen mittels Berechnung der arithmetischen Differenz beider Zahlen erfolgen. Der Quotient der Zahlen stellt ein anderes einfaches Beispiel für eine Vergleichsvorschrift dar.

Das Verfahren gemäß dem ersten Aspekt der Erfindung liefert eine einfache und dennoch robuste Abschätzung und Differenzierung der Anwesenheit von einer oder aber eine Mehrzahl von Personen im überwachten Raumbereich einer Personenschleuse. Vor allem sind die zur Durchführung des Verfahrens erforderlichen Schritte, insbesondere die Schritte zur Bestimmung des Schätzergebnisses aus den empfangenen Tiefenbildern, mit geringem Verarbeitungsaufwand, insbesondere Rechenaufwand, verbunden. Somit können hier, etwa im Unterschied zu im Rahmen der Personenerkennung häufig eingesetzten komplexen und somit rechenintensiven Bildverarbeitungs- und Modellierungsverfahren, auch Verarbeitungseinrichtungen, insbesondere Rechnersysteme wie etwa Mikrocontroller, mit relativ geringer Verarbeitungsleistung eingesetzt werden. Dies ist insbesondere im Hinblick auf eine besonders effiziente und kostengünstige Lösung von Bedeutung. Des Weiteren können an sich bekannte und somit gut und kostengünstig verfügbare 3D-Bildsensoren, wie etwa Stereokameras oder TOF-Kameras, zur Erzeugung der im Rahmen des Verfahrens verarbeiteten Tiefenbilder genutzt werden.

Nachfolgend werden bevorzugte Ausführungsformen des Verfahrens beschrieben, die jeweils, soweit dies nicht ausdrücklich ausgeschlossen wird oder technisch unmöglich ist, beliebig miteinander sowie mit den weiteren beschriebenen anderen Aspekten der Erfindung kombiniert werden können und sich insbesondere ebenso auf diese im weiteren beschriebenen anderen Aspekte der Erfindung beziehen.

Gemäß einigen Ausführungsformen weist das Verfahren des Weiteren das Auslösen einer Funktionalität der Personenschleuse in Abhängigkeit von dem Schätzergebnis auf. Auf diese Weise kann das gewonnene Schätzergebnis auf automatisierte Weise zur weiteren Steuerung der Personenschleuse genutzt werden, was insbesondere im Hinblick auf eine weitgehende oder vollständige Automatisierung der Personenschleuse vorteilhaft sein kann. Die auszulösende Funktionalität kann insbesondere eine Signalisierung betreffen, wie etwa eine optische oder akustische Signalisierung oder eine Ausgabe einer Information an einer Benutzerschnittstelle, oder sie kann das Öffnen oder Schließen von Passierbeschränkungen zur Personenschleuse, insbesondere einer oder mehreren Türen, oder das Aktivieren eines Authentifizierungsvorgangs zur Authentifizierung einer in der Personenschleuse befindlichen Person betreffen. Wenn beispielsweise gemäß dem Schätzergebnis festgestellt wurde, dass sich nur eine einzige Person in der Personenschleuse befindet, so könnte die genannte Authentifizierung ausgelöst werden, während andernfalls, wenn eine Mehrzahl von Personen in der Schleuse festgestellt wurde, eine entsprechende Signalisierung im Sinne einer Alarmierung sowie eine Ausgabe einer Information oder Benutzerschnittstelle, etwa dass die Personen die Personenschleuse zu verlassen hätten, unter gleichzeitiger Öffnung einer Zugangstür bzw. eines Zugangstürenpaars zur Personenschleuse ausgelöst werden.

Gemäß einigen Ausführungsformen ist die Personenschleuse als bidirektionale Durchgangsschleuse betreibbar und das Verfahren wird für jede der beiden Durchgangsrichtungen angewandt. Somit kann die Personenschleuse insbesondere auch dann eingesetzt werden, wenn ein bidirektionaler Betrieb erforderlich ist, etwa dann, wenn sowohl eine Zugangsüberprüfung als auch eine Ausgangsüberprüfung von Personen bezüglich eines durch die Personenschleuse abgesicherten räumlichen Bereichs, insbesondere zur Personenvereinzelungsüberwachung, erforderlich ist. Mit Hilfe einer solchen bidirektionalen Personenschleuse lässt sich ein bidirektionaler Betrieb auf besonders platzsparende Weise realisieren. Insbesondere kann so ein paralleler Betrieb von mehreren Personenschleusen für unterschiedliche Durchgangsrichtungen unter Wahrung der genannten Vorteile der erfindungsgemäßen Lösung vermieden werden oder jedenfalls die Anzahl von parallel betriebenen Personenschleusen bei gleichem Schleusungsvolumen (Anzahl zu abzufertigender Personen pro Zeiteinheit) verringert werden.

Gemäß einigen Ausführungsformen ist der Raumbereich der Personenschleuse zumindest an einer Seite mittels einer beweglichen Passierbeschränkung, beispielsweise einer oder mehreren Türen, oder einer Schranke, abschließbar und das Verfahren weist des Weiteren auf: (i) Bestimmen des Abstands eines in dem Raumbereich befindlichen Objekts anhand zumindest eines der Tiefenbilder und (ii) Auslösen einer Öffnung oder Schließung der Passierbeschränkung in Abhängigkeit von dem bestimmten Abstand. Auf diese Weise ist es möglich, dass Öffnen und/oder Schließen der Passierbeschränkung in Abhängigkeit davon auszulösen, wo sich ein oder mehrere in der Personenschleuse befindliche Objekte, insbesondere Personen, gegebenenfalls einschließlich mitgeführter Gegenstände, innerhalb der Personenschleuse befinden. Dies kann insbesondere dazu genutzt werden, zu verhindern, dass die Bewegung zum Öffnen oder Schließen der Passierbeschränkung zu einem Zeitpunkt erfolgt, in dem die Gefahr einer unerwünschten Wechselwirkung zwischen der bewegten Passierbeschränkung und dem Objekt besteht. Auch ist es denkbar, den Zeitpunkt oder die Zeitspanne zur Erfassung der verfahrensgemäß zum Zwecke der Bestimmung des Schätzergebnisses zu verarbeitenden Tiefenbilder in Abhängigkeit von dem bestimmten Abstand festzulegen. So kann insbesondere ein Aufnahmezeitpunkt gewählt werden, bei dem sich das Objekt an einer zur Aufnahme der Tiefenbilder optimalen Position im überwachten Raumbereich bezüglich der 3D-Bildsensoren befindet.

Gemäß einigen Ausführungsformen weist das Verfahren des Weiteren auf: Durchführen einer Bildtransformation bezüglich zumindest einem, insbesondere sämtlichen, der Tiefenbilder vor Berechnung seines jeweiligen charakteristischen Tiefenbildwerts, wobei das jeweilige Tiefenbild im Rahmen der Bildtransformation mit einem Referenztiefenbild gemäß einer vorbestimmten Transformationsvorschrift kombiniert wird, durch die Bildbereiche, bezüglich derer das jeweilige Tiefenbild und das Referenzbild im Hinblick auf ihre jeweiligen zueinander korrespondierenden Bildpunktwerte übereinstimmen, gegenüber anderen Bildbereichen, bei denen keine solche Übereinstimmung vorliegt, im jeweiligen Tiefenbild durch vorbestimmte Veränderung ihrer zugehörigen Bildwerte abgehoben werden. Diese Veränderung kann insbesondere beinhalten, dass die Bildpunktwerte in dem übereinstimmenden Bildbereichen jeweils auf einen Extremwert, insbesondere den kleinsten oder den größten definierten Bildpunktwert, gesetzt und somit von den anderen Bildwerten abgehoben werden. Beispielsweise könnte dieser extremale Bildwert der Bildfarbe "schwarz" entsprechen, so dass das transformierte Tiefenbild nur dort Bildpunkte mit einem von Schwarz verschiedenen Bildpunktwert aufweist, wo die zueinander korrespondierenden Bildpunktwerte des ursprünglichen Tiefenbilds (vor der Transformation) und des Referenzbilds nicht übereinstimmen. Diese Ausführungsformen haben den Vorteil, dass das zumindest eine zu überwachende Objekt im transformierten Tiefenbild immer segmentiert vor einem abgehobenen Bildhintergrund erscheint, was dazu beitragen kann, die Effizienz und Robustheit der sich anschließenden weiteren Bildverarbeitung weiter zu verbessern.

Gemäß einigen Ausführungsformen wird beim Berechnen der charakteristischen Tiefenbildwerte, etwa in Form entsprechender gemittelter Bildwerte, der Tiefenbildwert zumindest eines der Tiefenbilder auf Basis einer Untermenge der einzelnen Bildpunktwerte dieses Tiefenbildes berechnet, wobei die Bildpunkte der Untermengen auf Basis ihres jeweiligen Bildpunktwertes so ausgewählt werden, dass alle diese Bildpunkte jeweils einen Punktwert jenseits einer vorbestimmten Bildpunktwertschwelle oder innerhalb eines vorbestimmten Bildpunktwertbereichs aufweisen. Beispielsweise könnten die Bildpunktwerte durch Grauwerte repräsentiert werden, wobei ein dunkler Grauwert eine große Entfernung und ein heller Grauwert eine kurze Entfernung zwischen dem das jeweilige Tiefenbild erzeugenden 3D-Bildsensor und dem aufgenommenen Objekt entsprechen. Die Bildpunktwertschwelle könnte dann so gelegt sein, dass nur Bildpunkte, deren Grauwert oberhalb der Bildpunktwertschwelle liegt (optional: oder ihr entspricht), zur Bestimmung des charakteristischen Tiefenbildwerts herangezogen werden. Eine solche Segmentierung des Tiefenbilds kann insbesondere zur Identifikation etwaiger unterschiedlicher Schwerpunkte beziehungsweise Cluster im Tiefenbild herangezogen werden, was insbesondere als zusätzliche Information zur Bestimmung des Schätzergebnisses genutzt werden kann. Des Weiteren kann die Segmentierung auch zur Erhöhung der Robustheit des Verfahrens genutzt werden, da nun nur die für das erfasste Objekt besonders repräsentativen Bildanteile für die nachfolgende Bestimmung des Schätzwertes herangezogen werden.

Gemäß einigen Ausführungsformen hierzu wird die zumindest eine Untermenge zusätzlich in Abhängigkeit von der jeweiligen räumlichen Lage der Bildpunkte im zugehörigen Tiefenbild bestimmt. So könnten insbesondere, beispielsweise zur Vermeidung von Fehlbewertungen aufgrund von Randeffekten am Randbereich eines erfassten Tiefenbildes, nur solche Bildpunkte in die zumindest eine Untermenge einbezogen werden, die einen Mindestabstand vom Rand des Tiefenbilds aufweisen.

Ein zweiter Aspekt der Erfindung betrifft ein Überwachungssystem zur Überwachung eines Raumbereichs in einer Personenschleuse, insbesondere zur Personenvereinzelungsüberwachung, wobei das System eingerichtet ist, bezüglich der Personenschleuse das Verfahren gemäß dem vorgenannten ersten Aspekt der Erfindung, wahlweise insbesondere gemäß einer oder mehreren der hierin beschriebenen Ausführungsformen dazu, auszuführen.

Ein dritter Aspekt der Erfindung betrifft ein Computerprogram, das Anweisungen aufweist, die bei ihrer Ausführung auf einem oder mehreren Prozessoren des Überwachungssystems nach dem zweiten Aspekt der Erfindung, dieses veranlassen, das Verfahren gemäß dem ersten Aspekt der Erfindung, wahlweise insbesondere gemäß einer oder mehreren der hierin beschriebenen Ausführungsformen dazu, auszuführen.

Das Computerprogramm kann insbesondere auf einem nichtflüchtigen Datenträger gespeichert sein. Bevorzugt ist dies ein Datenträger in Form eines optischen Datenträgers oder eines Flashspeichermoduls. Dies kann vorteilhaft sein, wenn das Computerprogramm als solches unabhängig von einer Prozessorplattform gehandelt werden soll, auf der das ein bzw. die mehreren Programme auszuführen sind. In einer anderen Implementierung kann das Computerprogramm als eine Datei oder Gruppe von Dateien auf einer oder mehreren Datenverarbeitungseinheiten, insbesondere auf einem Server vorliegen, und über eine Datenverbindung, beispielsweise das Internet oder eine dedizierte Datenverbindung, wie etwa ein proprietäres oder lokales Netzwerk, herunterladbar sein. Zudem kann das Computerprogramm eine Mehrzahl von zusammenwirkenden einzelnen Programmmodulen aufweisen.

Das Überwachungssystem nach dem zweiten Aspekt der Erfindung kann entsprechend einen Programmspeicher aufweisen, in dem das Computerprogramm abgelegt ist. Alternativ kann das Überwachungssystem auch eingerichtet sein, über eine Kommunikationsverbindung auf ein extern, beispielsweise auf einem oder mehreren Servern oder anderen Datenverarbeitungseinheiten verfügbares Computerprogramm zuzugreifen, insbesondere um mit diesem Daten auszutauschen, die während des Ablaufs des Verfahrens bzw. Computerprogramms Verwendung finden oder Ausgaben des Computerprogramms darstellen.

Ein vierter Aspekt der Erfindung betrifft eine Personenschleuse, aufweisend: (i) ein Überwachungssystem gemäß dem zweiten Aspekt der Erfindung, wahlweise insbesondere gemäß einer oder mehreren der hierin beschriebenen Ausführungsformen dazu, zur Überwachung eines Raumbereichs der Personenschleuse, insbesondere zur Personenvereinzelungsüberwachung; und (ii) eine Mehrzahl von 3D-Bildsensoren die an unterschiedlichen Positionen im Bereich der Personenschleuse angeordnet sind, wobei die 3D-Bildsensoren jeweils eingerichtet sind, ein zugehöriges Tiefenbild des Raumbereichs zu erzeugen und an das Überwachungssystem zu liefern, wobei das jeweilige Tiefenbild für jeden seiner Bildpunkte anhand eines diesem zugeordneten Bildpunktwerts die Entfernung des darauf abgebildeten Objektes oder Objektabschnitts vom zugehörigen 3D-Bildsensor angibt.

Nachfolgend werden bevorzugte Ausführungsformen der Personenschleuse beschrieben, die jeweils, soweit dies nicht ausdrücklich ausgeschlossen wird oder technisch unmöglich ist, beliebig miteinander sowie mit den weiteren hierin beschriebenen anderen Aspekten der Erfindung kombiniert werden können.

Gemäß einigen Ausführungsformen sind zwei der 3D-Bildsensoren zur Anordnung an einander gegenüberliegenden Seiten des Raumbereichs angeordnet, um diesen aus, zumindest im Wesentlichen, entgegengesetzt zueinander verlaufenden zentrale Erfassungsrichtungen bildsensorisch zu erfassen. Jeder der 3D-Bildsensoren ist eingerichtet ein ganzes sich in lateraler Richtung erstreckendes zweidimensionales Sichtfeld zu erfassen und für dieses Sichtfeld zusätzlich eine dritte Dimension (Tiefenkomponente des erfassten Bildes zu erfassen).

Unter der "zentralen Erfassungsrichtung" eines 3D-Bildsensors ist hier eine vom Zentrum oder geometrischen Schwerpunkt dieses Sichtfelds ausgehende senkrecht dazu verlaufende Richtung zu verstehen, die somit eine zentrale virtuelle Linie im Sichtfeld des 3D-Bildsensors definiert (entspricht der Sichtachse bzw. im Falle eines rotationssymmetrischen optischen Systems dessen optischer Achse im Sinne der Optik).

"Zumindest im Wesentlichen" soll hier bedeuten, dass die zentrale Erfassungsrichtungen der zwei 3D-Bildsensoren einen Winkel im Bereich von 135 bis 225 Grad einschließen (180 Grad entspricht genau entgegengesetzt zueinander verlaufenden zentralen Erfassungsrichtungen).

Auf diese Weise kann die Zuverlässigkeit der Personenschleuse im Hinblick auf die Vereinzelungsüberwachung weiter gesteigert werden, da ein Objekt oder eine Gruppe aus mehreren, insbesondere nah beieinander befindlichen Objekten somit von zwei signifikant verschiedenen zentrale Erfassungsrichtungen aus bildsensorisch erfasst werden kann. Dies ermöglicht bei der Erkennung einer etwaigen Mehrzahl solcher Objekte deutliche Robustheitsvorteile des Erkennungsverfahrens gegenüber einer Erfassung aus nur geringfügig unterschiedlichen zentralen Erfassungsrichtungen. Insbesondere ist somit eine simultane Erfassung von Vorderseite und Hinterseite des Objekts bzw. der Objektgruppe möglich.

Gemäß einigen Ausführungsformen sind die zwei einander gegenüberliegenden 3D-Bildsensoren so bezüglich des Raumbereichs angeordnet, dass die Projektion ihrer zentralen Erfassungsrichtungen auf eine definierte und bezüglich der Personenschleuse horizontal verlaufenden virtuelle Ebene eine auf dieselbe Ebene projizierte, durch die Geometrie der Personenschleuse festgelegten Durchgangsrichtung in einem von Null verschiedenen Winkel schneidet, sodass die zentralen Erfassungsrichtungen der zwei 3D-Bildsensoren jeweils schräg zur Durchgangsrichtung verlaufen. Auf diese Weise ist es insbesondere möglich, die 3D-Bildsensoren außerhalb eines durch die Durchgangsrichtung definierten Durchgangskorridors anzuordnen, beispielsweise in einer Ecke des Raumbereichs innerhalb der Personenschleuse. So wird zum einen vermieden, dass die 3D-Bildsensoren einen Durchgang durch die Schleuse behindern, und zum anderen, dass eine Anordnung an einer, ansonsten nicht erforderlichen, Deckenkonstruktion der Schleuse oder an einer Passierbeschränkung der Personenschleuse, wie etwa einer oder mehreren Türen, erfolgen muss.

Gemäß einigen Ausführungsformen sind die zwei einander gegenüberliegenden 3D-Bildsensoren an einer eingangsseitigen bzw. ausgangsseitigen Passierbeschänkung, insbesondere Türe oder Türenpaar, der Personenschleuse angeordnet oder baulich in darin integriert. Gemäß einigen Ausführungsformen weist die Personenschleuse des Weiteren eine nur über den Raumbereich zugängliche Authentifizierungsvorrichtung zur Authentifizierung einer in der Personenschleuse anwesenden Person auf. Zudem weist die Authentifizierungsvorrichtung eine Benutzerschnittstelle mit einer ausgezeichneten Hauptinteraktionsrichtung für die Interaktion zwischen der Benutzerschnittstelle und einem Benutzer derselben auf. Dabei ist die Benutzerschnittstelle so bezüglich des Raumbereichs angeordnet, das ihre auf die horizontale virtuelle Ebene projizierte Hauptinteraktionsrichtung in einem von Null verschiedenen Winkel zur jeweiligen Projektion der zentralen Erfassungsrichtung der zwei einander gegenüberliegenden 3D-Bildsensoren verläuft. Auf diese Weise ist sichergestellt, dass eine zumindest ungefähre Ausrichtung der zentralen Erfassungsrichtung von einem der 3D-Bildsensoren an der Hauptinteraktionsrichtung der Authentifizierungsvorrichtung vorliegt, und somit eine Person insbesondere auch während der Vornahme einer Authentifizierung mittels des 3D-Bildsensors optimal, insbesondere von vorne oder von hinten, bildsensorisch überwacht werden kann.

Unter einer "Hauptinteraktionsrichtung" der Benutzerschnittstelle ist eine Richtung im Raum zu verstehen, bezüglich der die Benutzerschnittstelle in dem Sinne gerichtet ist, dass sie konfiguriert ist, nur in einem um diese Hauptinteraktionsrichtung definierten begrenzten Raumwinkel (beliebiger Form) mit dem Benutzer zur Eingabe und/oder Ausgabe von Benutzerschnittstelleninformationen in Kontakt zu treten. So stellen insbesondere ein Bildschirm, eine Kamera, ein Sensor für biometrische Merkmale (Fingerprintsensor, Gesichtsabtastungssensor, Irisscanner, usw.), eine Tastatur oder ein eingebautes Mikrophon, dass im Wesentlichen nur aus einem begrenzten Raumwinkel vor der Benutzerschnittstelle aus Schallwellen empfangen kann, jeweils Benutzerschnittstellen oder Elemente davon dar, die jeweils eine zugehörige Hauptinteraktionsrichtung aufweisen.

Gemäß einigen Ausführungsformen ist die Anordnung der zumindest einen Authentifizierungsvorrichtung bezüglich des Raumbereichs im Hinblick auf ihre Lage oder Orientierung oder beide rekonfigurierbar ausgestaltet. Dies erlaubt insbesondere eine anwendungsspezifische Anpassung der Personenschleuse, beispielsweise in Abhängigkeit davon, ob sie als unidirektionale oder als bidirektionale Schleuse genutzt werden soll. So könnte die Authentifizierungsvorrichtung insbesondere im bidirektionalen Fall in einem Winkel zum Durchgangsbereich so konfiguriert werden, dass ihre Bedienoberfläche stets einer in die Personenschleuse eintretenden Person zugewandt wird, unabhängig von deren Eintrittsrichtung in die Personenschleuse. Alternativ könnten auch für jede der Durchgangsrichtungen eine eigene Authentifizierungsvorrichtung vorgesehen sein, die so angeordnet und orientiert wird, dass wiederum ihre jeweilige Bedienoberfläche stets einer entlang der entsprechenden Durchgangsrichtung in die Personenschleuse eintretenden Person zugewandt ist. Dabei könnten die Authentifizierungsvorrichtungen jeweils auf den Durchgangsbereich bzw. Raumbereich der Personenschleuse bezogen dezentral angeordnet werden, sodass die Authentifizierungsvorrichtungen in deutlichem Abstand voneinander platziert sind. Dies ist insbesondere im Hinblick auf die im Weiteren beschriebene Ausführungsform vorteilhaft, bei der detektiert wird, ob eine Person eine Mitte des Raumbereichs erreicht oder überschritten hat.

Gemäß einigen Ausführungsformen ist die Authentifizierungsvorrichtung bzw. zumindest eine der Authentifizierungsvorrichtungen unmittelbar oder mittelbar an einer Fußbodenleiste im Raumbereich der Personenschleuse angebracht. Das kann insbesondere dahingehend vorteilhaft sein, dass eine solche bereits aus anderen Gründen vorhandene Fußbodenleiste im Sinne einer Mehrfachverwendung ("Dual-use") zugleich eine Halte- und Führungsstruktur, insbesondere Schiene, darstellt, entlang der die jeweilige Authentifizierungsvorrichtung zum Zwecke ihrer variablen Anordnung verschiebbar angebracht ist. So lässt sich eine besonders effiziente Implementierung erreichen.

Gemäß einigen Ausführungsformen ist die Authentifizierungsvorrichtung bzw. zumindest eine der Authentifizierungsvorrichtungen bezüglich des Verlaufs der zugehörigen Durchgangsrichtung durch die Personenschleuse jenseits der Mitte des Raumbereichs angeordnet. So kann erreicht werden, dass eine in Durchgangsrichtung in die Personenschleuse eintretende Person eine über die Mitte der Personenschleuse hinausreichende Mindestdistanz zurücklegen muss, bevor sie sich Authentifizieren kann, sodass sichergestellt wird, dass ausreichend Zeit für eine Überwachung zur Verfügung steht, und/oder ein für die bildsensorische Erfassung besonders geeigneter Abschnitt des Raumbereichs durchschritten werden muss, bevor die Authentifizierung möglich ist. Insbesondere kann ein solcher Abschnitt in der Mitte des Raumbereichs vorgesehen.

Gemäß einigen Ausführungsformen sind die 3D-Bildsensoren jeweils an einer zugeordneten seitlich im Umfeld des Raumbereichs vorgesehenen Stützstruktur der Personenschleuse angeordnet. Eine solche Stützstruktur kann entweder eine von den seitlichen räumlichen Begrenzungsstrukturen der Personenschleuse, insbesondere von deren gegebenenfalls vorhandenen Seitenwänden oder Türen, separat ausgebildete Struktur sein, oder aber mit zumindest einer dieser Begrenzungsstrukturen zusammenfallen. Der Vorteil der Verwendung einer solchen seitlichen Stützstruktur liegt wiederum darin, dass auf eine insbesondere auch zu diesem Zweck vorgesehene Deckenkonstruktion für die Personenschleuse verzichtet werden kann.

Die in Bezug auf den ersten Aspekt der Erfindung erläuterten Merkmale und Vorteile gelten entsprechend auch für die weiteren Aspekte der Erfindung.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt

**Fig. 1** schematisch eine bekannte Art einer Personenschleuse, insbesondere für den unidirektionalen Betrieb;

**Fig. 2** schematisch verschiedene beispielhafte Szenarien bzgl. der Anwesenheit von einer oder mehreren Personen, in einer Personenschleuse, wobei die Szenarien bezüglich der Anzahl der anwesenden Personen zu unterscheiden sind;

**Fig. 3** schematisch eine unidirektional oder bidirektional einsetzbare Personenschleuse gemäß einer bevorzugten Ausführungsform der vorliegenden Erfindung;

**Fig. 4** zwei beispielhaftee Tiefenbilder, jeweils in der Form eines Grauwertbildes; und

**Fig. 5A und 5B** ein Flussdiagramm zur Veranschaulichung einer bevorzugten Ausführungsform des erfindungsgemäßen Verfahrens.

In den Figuren werden durchgängig dieselben Bezugszeichen für dieselben oder einander entsprechende Elemente der Erfindung verwendet.

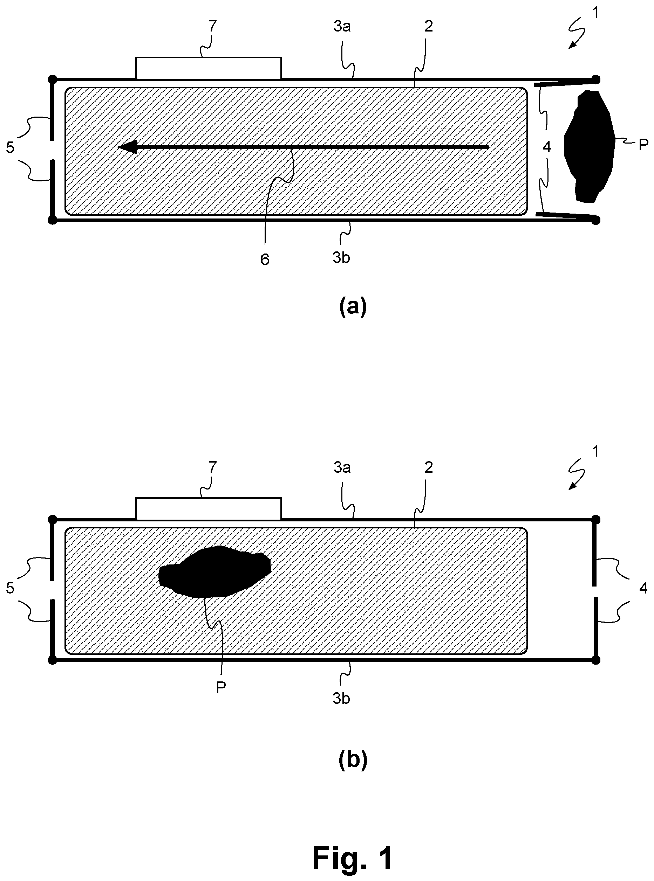

Die in **Fig. 1** in einer Aufsicht von oben illustrierte Personenschleuse 1 ist als ein abschließbarer Kanal mit im Wesentlichen rechteckiger Grundfläche ausgebildet, dessen seitliche Begrenzungen durch zwei Seitenwände 3a und 3b, ein Paar von bezüglich einer Durchgangsrichtung 6 der Personenschleuse eingangsseitigen Schwenktüren 4 sowie einem weiteren Paar von bezüglich der Durchgangsrichtung 6 ausgangsseitigen Schwenktüren 5 gebildet werden. Der durch diese seitlichen Begrenzungen eingefasste Innenraum, jedenfalls der überwiegende zentrale Teil davon, stellt einen von einem zugehörigen Überwachungssystem überwachten Raumbereich 2 dar (schraffiert dargestellt). Bei herkömmlichen Personenschleusen, wie der in Fig. 1 dargestellten, ist dieses Überwachungssystem typischerweise in einer Decke (nicht dargestellt) der Personenschleuse angeordnet, so dass die Überwachung des Raumbereichs, insbesondere zum Zwecke der Vereinzelungsüberwachung dementsprechend von oben her stattfindet. Wenn eine Person P die Personenschleuse 1 passieren will, betritt sie, gegebenenfalls nach einer vorherigen Identifizierung (etwa mittels eines Ausweislesers am Zugang), den Raumbereich 2 der Personenschleuse 1 durch das dann geöffnete Türenpaar 4 (**Fig. 1 (a)**), und durchquert diesen bis zu einer in diesem vorgesehenen Authentifizierungsvorrichtung 7 der Personenschleuse 1, um sich dort zu authentifizieren (**Fig. 1 (b)**).

Unmittelbar nach dem Eintritt der Person P in den Raumbereich 2 wird das eingangseitige Türenpaar geschlossen, um den Eintritt einer weiteren Person vor dem Abschluss des Schleusungsvorgangs zu vermeiden oder jedenfalls zu erschweren. Die Authentifizierung kann insbesondere anhand zumindest eines sensorisch von der Authentifizierungsvorrichtung 7 erfassten biometrischen Merkmals der Person P, etwa mittels Iriserkennung, Fingerabdruckerkennung oder Gesichtsvermessung auf bekannte Weise erfolgen. Während des gesamten Zeitraums vom Eintritt der Person P in die Personenschleuse bis zu ihrer erfolgreichen Authentifizierung durch die Authentifizierungsvorrichtung 7 bleibt das ausgangsseitige Türenpaar 5 geschlossen. Im Falle einer erfolgreichen Authentifizierung öffnet es sich, um der Person P den Ausgang aus der Personenschleuse zu ermöglichen. Andernfalls bleibt es geschlossen und der Durchgang wird somit verweigert.

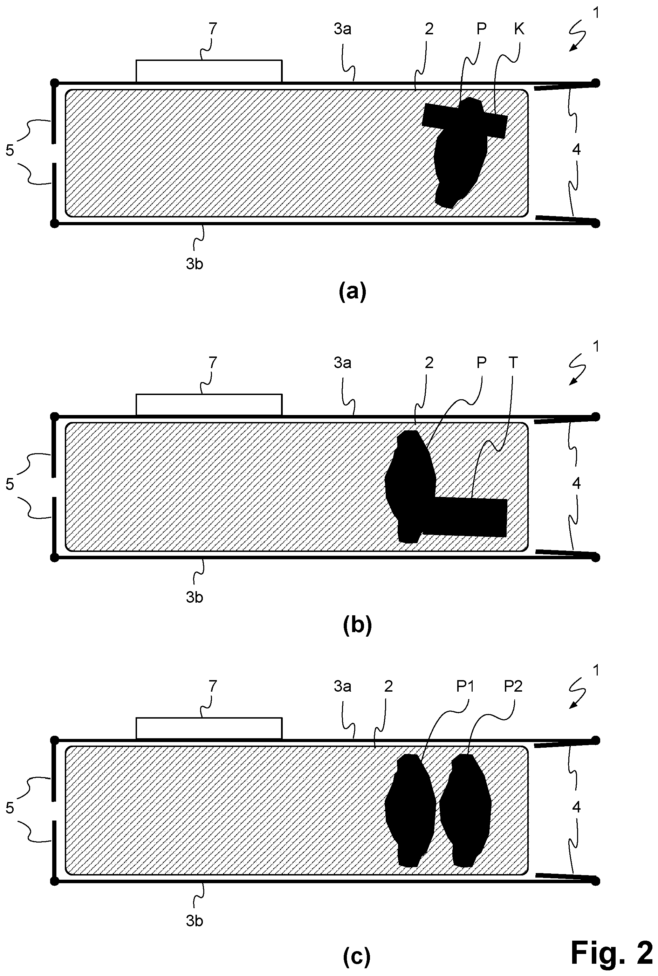

In **Fig. 2** sind in den Teilfiguren 2 (a) bis (c) schematisch drei verschiedene beispielhafte Szenarien bzgl. der Anwesenheit von einer oder mehreren Personen in einer Personenschleuse 1 am Beispiel der Personenschleuse 1 aus Fig. 1 illustriert. Die Personenschleuse kann insbesondere einen Zugang zu einem zugangsbeschränkten Bereich, insbesondere Sicherheitsbereich sichern, wie etwa einen Fahrgast- oder Fluggastabfertigungsbereich. Im Szenario nach Fig. 2(a) befindet sich genau eine Person P, welche einen Handkoffer K trägt, in der Personenschleuse 1. Im Szenario nach Fig. 2(b) befindet sich wiederum genau eine Person P in der Personenschleuse 1, diesmal trägt sie jedoch keinen Koffer, sondern zieht einen Trolley T (ziehbaren Rollkoffer) hinter sich her. Im Szenario nach Fig. 2(c) befinden sich dagegen zwei eng aufeinanderfolgende Personen P1 und P2 in der Personenschleuse 1. Zum Zwecke der Vereinzelungsüberwachung muss ein geeignetes Überwachungssystem also in der Lage sein, die verschiedenen Szenarios zu unterscheiden, d.h. insbesondere die beiden Szenarios aus Fig. 2 (a) und (b) als zulässig und das Szenario aus Fig. 2 (c) als unzulässig zu erkennen.

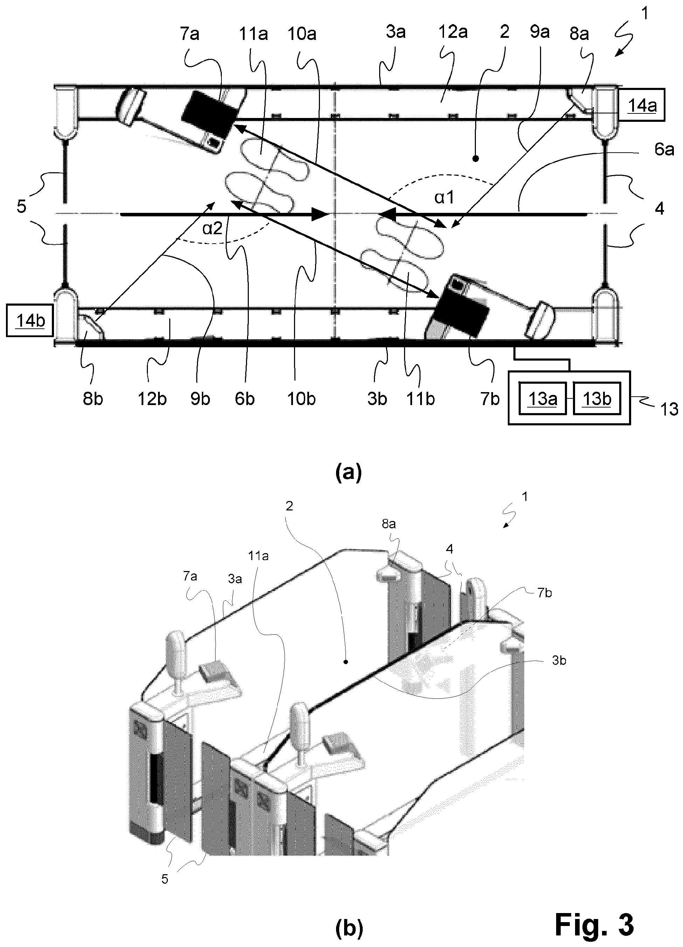

In **Fig. 3** ist eine Personenschleuse 1 gemäß einer bevorzugten Ausführungsform der Erfindung einerseits in einer Aufsicht von oben (**Fig. 3 (a)**) und andererseits (ohne Überwachungssystem) in einer perspektivischen Teilansicht von schräg oben dargestellt (**Fig. 3 (b)**, die zugleich auf der rechten unteren Bildseite ausschnittsweise auch eine unmittelbar benachbarte weitere Personenschleuse zeigt).

Auch bei dieser Personenschleuse 1 ist in ihrem durch Seitenwände 3a und 3b sowie zwei Türenpaare 4 und 5 eingeschlossenen Innenraum ein überwachter Raumbereich 2 vorgesehen, der bevorzugt, zumindest im Wesentlichen, den gesamten Innenraum abdeckt. Die Personenschleuse ist als bidirektionale Durchgangsschleuse ausgelegt, was insbesondere dann Anwendung finden kann, wenn sowohl das Eintreten als auch das Austreten in einen zugangsbeschränkten Bereich durch dieselbe Personenschleuse 11 überwacht werden soll und jeweils eine Authentisierung erforderlich ist.

Zur Überwachung, insbesondere Vereinzelungsüberwachung, bezüglich des Raumbereichs 2 verfügt die Personenschleuse 1 über zwei an entgegengesetzten Ecken und somit auch Seiten des eine im Wesentlichen rechteckige Grundfläche aufweisenden Raumbereichs 2 angeordnete Überwachungssysteme 8a und 8b. Diese sind jeweils als 3D-Bildsensor ausgebildet, beispielsweise als Stereokamera oder TOF-Kamera oder Paar von Einzelkameras, deren individuellen Ausgangssingale so kombiniert werden, dass die Kombination wie eine integrale Stereokamera ein 3D-Bild liefert. Die 3D-Bildsensoren sind jeweils insbesondere eingerichtet, den Raumbereich 2 aus, zumindest im Wesentlichen, entgegengesetzt zueinander verlaufenden zentralen Erfassungsrichtungen bildsensorisch zumindest teilweise zu erfassen und entsprechend ein den Raumbereich 2 jedenfalls größtenteils abdeckendes Tiefenbild zu erzeugen und an ein Überwachungssystem 13 zu liefern. Dabei gibt das jeweilige Tiefenbild für jeden seiner Bildpunkte anhand eines diesem zugeordneten Bildpunktwerts die Entfernung des darauf abgebildeten Objektes oder Objektabschnitts vom zugehörigen 3D-Bildsensor 8a bzw. 8b an.

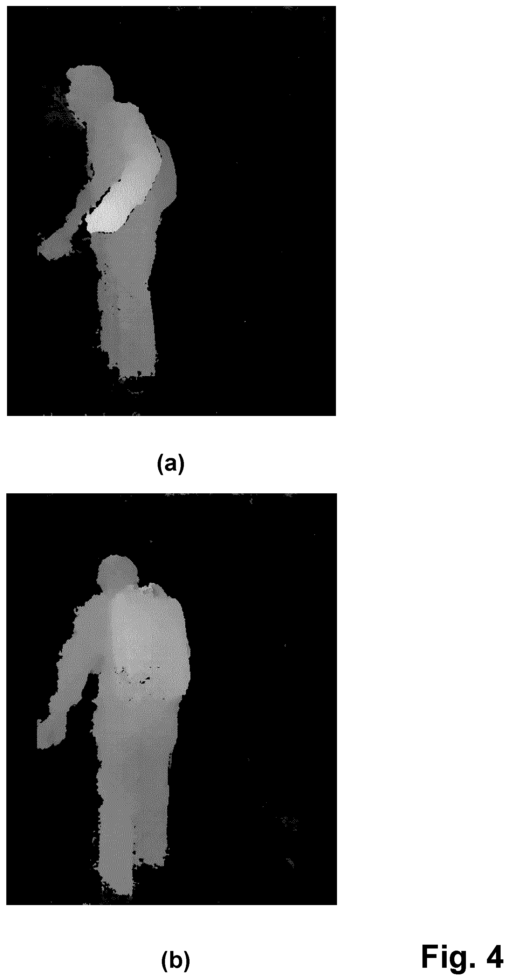

Zwei verschiedene Beispiele für ein solches Tiefenbild in Form eines Grauwertbilds sind in **Fig. 4 (a) bzw. (b)** dargestellt, wobei die Bildbereiche mit einem hellen (großen) Grauwert eine kurze Objektentfernung vom 3D-Bildsensor anzeigen und entsprechend die Bildbereiche mit einem dunklen (kleinen) Grauwert eine weite Objektentfernung vom 3D-Bildsensor anzeigen. Deutlich hebt sich dabei jeweils die in der Personenschleuse 1 detektierte Person P vom dunklen Hintergrund des Tiefenbilds ab.

Wiederum Bezug nehmend auf **Fig. 3,** sind die zwei einander gegenüberliegenden 3D-Bildsensoren aufgrund ihrer Ecklage so bezüglich des Raumbereichs 2 angeordnet, dass die Projektion 9a bzw. 9b ihrer jeweils diagonal von der jeweiligen zugehörigen Ecke des Raumbereichs 2 ausgehenden zentrale Erfassungsrichtungen auf eine definierte und bezüglich der Personenschleuse horizontal verlaufenden virtuelle Ebene, die beispielsweise mit der durch die Bodenfläche des Raumbereichs 2 definierte Ebene zusammenfallen kann, eine auf dieselbe Ebene projizierte, durch die Geometrie der Personenschleuse 1 jeweils festgelegten Durchgangsrichtung 6a bzw. 6b in einem von Null verschiedenen Winkel schneidet. Die Projektionen 9a, 9b der zentralen Erfassungsrichtungen der zwei 3D-Bildsensoren 8a, 8b verlaufen somit jeweils schräg zur jeweiligen zugehörigen Durchgangsrichtung 6a bzw. 6b.

Zur Authentifizierung einer Person P weist die Personenschleuse 1 in ihrem Raumbereich 2 zwei Authentifizierungsvorrichtungen 7a und 7b auf, eine je Durchgangsrichtung 6a bzw. 6b. Jede der Authentifizierungsvorrichtungen 7a und 7b weist wiederum eine zugehörige Benutzerschnittstelle mit einer ausgezeichneten Hauptinteraktionsrichtung 10a bzw. 10b für die Interaktion zwischen dieser Benutzerschnittstelle und einem Benutzer derselben auf (hierbei wird ggf. nicht zwischen Eingabe- und Ausgaberichtung unterschieden, sondern diese werden zusammenfassend, wie durch den jeweiligen Doppelpfeil in Fig. 3(a) dargestellt, als "Hauptinteraktionsrichtung" bezeichnet). Jede der Authentifizierungsvorrichtungen 7a und 7b ist dabei so orientiert vorgesehen, dass ihre zugehörige Benutzerschnittstelle so bezüglich des Raumbereichs 2 angeordnet ist, dass ihre auf die horizontale virtuelle Ebene projizierte Hauptinteraktionsrichtung 10a bzw. 10b in einem von Null verschiedenen jeweiligen Winkel $\alpha1$ bzw. $\alpha2$, der vorzugsweise zwischen 45 Grad und 135 Grad beträgt, zur jeweiligen Projektion der zentralen Erfassungsrichtung 9a bzw. 9b der zwei einander gegenüberliegenden 3D-Bildsensoren verläuft. Bevorzugt ist die jeweilige Authentifizierungsvorrichtung so angeordnet, dass ihre Hauptinteraktionsrichtung in einem Winkel im Bereich von 30 Grad bis 60 Grad mit der zugehörigen Seitenwand 3a bzw. 3b steht, insbesondere in Fällen, bei denen die 3D-Bildsensoren nicht in Ecken des Raumbereichs, sondern andernorts, insbesondere stirnseitig, etwa in oder an den Passierbeschränkungen vorgesehen sind.

Wenn somit ein Benutzer von einer Position 11a bzw. 11b aus mit der jeweiligen Benutzerschnittstelle entlang ihrer Hauptinteraktionsrichtung 10a bzw. 10b interagiert, kann er von den 3D-Bildsensoren 8a und 8b jeweils von der Seite her entlang von deren jeweiliger zentralen Erfassungsrichtung 9a bzw. 9b sensorisch erfasst werden, so dass sich eine zur Erkennung einer gegebenenfalls weiteren Person P2 in der Personenschleuse, insbesondere einer unmittelbar hinter der Person P bzw. P1 befindlichen weiteren Person P2, eine besonders günstige räumliche Konstellation ergibt, bei der aufgrund der seitlichen Sicht der 3D-Bildsensoren 8a bzw. 8b die Zuverlässigkeit der Erkennung einer solchen weiteren Person P2 erhöht ist.

Die Authentifizierungsvorrichtungen 7a und 7b sind jeweils unmittelbar oder mittelbar über eine entsprechende Stützstruktur (nicht dargestellt) an einer Fußbodenleiste 12a bzw. 12b am seitlichen Rand des Raumbereichs 2 angebracht. Optional können sie auch entlang der Fußbodenleiste verschiebbar angebracht sein. Bevorzugt sind die Authentifizierungsvorrichtungen 7a und/oder 7b bezüglich des Verlaufs der Durchgangsrichtung 6a bzw. 6b jenseits der Mitte des Raumbereichs 2 (vgl. vertikale gestrichelte Mittellinie in Fig. 3 (a)) angeordnet, wie in Fig. 3 dargestellt, sodass die zu authentifizierende Person diese Mitte überschreiten muss, um zu der entsprechenden Durchgangsrichtung 6a bzw. 6b zugehörigen Authentifizierungsvorrichtung 7a bzw. 7b zu gelangen.

Die Personenschleuse 1 kann dazu insbesondere so konfiguriert sein, dass das entsprechende zum Zugang genutzte Türenpaar 4 bzw. 5 geschlossen wird, wenn die eingetretene Person diese Mitte passiert, was mittels der 3D-Bildsensoren 8a bzw. 8b erfasst werden kann.

Des Weiteren weist die Personenschleuse 1 ein Überwachungssystem 13 auf, welches insbesondere eine Prozessorplattform 13a mit einem oder mehreren Prozessoren sowie einen zugeordneten Speicher 13b aufweisen kann. Das Überwachungssystem 13 dient dazu, die Personenschleuse 1 zu steuern, insbesondere zur Durchführung eines Verfahrens zur Überwachung des Raumbereichs 2 der Personenschleuse 1, wie etwa zur Personenvereinzelungsüberwachung bezüglich des Raumbereichs 2. Eine beispielhafte Ausführungsform eines solchen erfindungsgemäßen Überwachungsverfahren wird nachfolgend unter Bezugnahme auf **Fig. 4** erläutert. Das Verfahren kann insbesondere als computerlimitiertes Verfahren ausgebildet sein, wozu ein oder mehrere entsprechende zur Ausführung des Verfahrens auf der Prozessorplattform 13a konfigurierte Computerprogramme im Speicher 13b des Überwachungssystems 13 abgelegt sein können, um durch die Prozessorplattform 13a zur Durchführung des Verfahrens verwendet zu werden.

Schließlich kann die Personenschleuse 1 auch noch für eine oder beide Durchgangsrichtungen eine dem jeweiligen eingangsseitigen Türenpaar zugeordnete Identifizierungsvorrichtung 14a bzw. 14b aufweisen. Sie dient dazu, dass sich eine Person P, welche die Personenschleuse durchqueren möchte, zunächst vor dem Eintritt in diese identifizieren muss, etwa mittels eines Ausweises. So kann erreicht werden, dass bereits der Raumbereich 2 nur dann durch Öffnung des jeweils eingangsseitigen Türenpaars zugänglich wird, wenn eine solche Identifizierung erfolgreich verlaufen ist. Dadurch kann sichergestellt werden, dass eine Identifikation der zu schleusenden Person P selbst dann erfolgt, wenn der nachfolgende Authentifizierungsvorgang scheitert, oder aber im Falle der bereits scheiternden Identifikation, die Personenschleuse 1 erst gar nicht geöffnet wird.

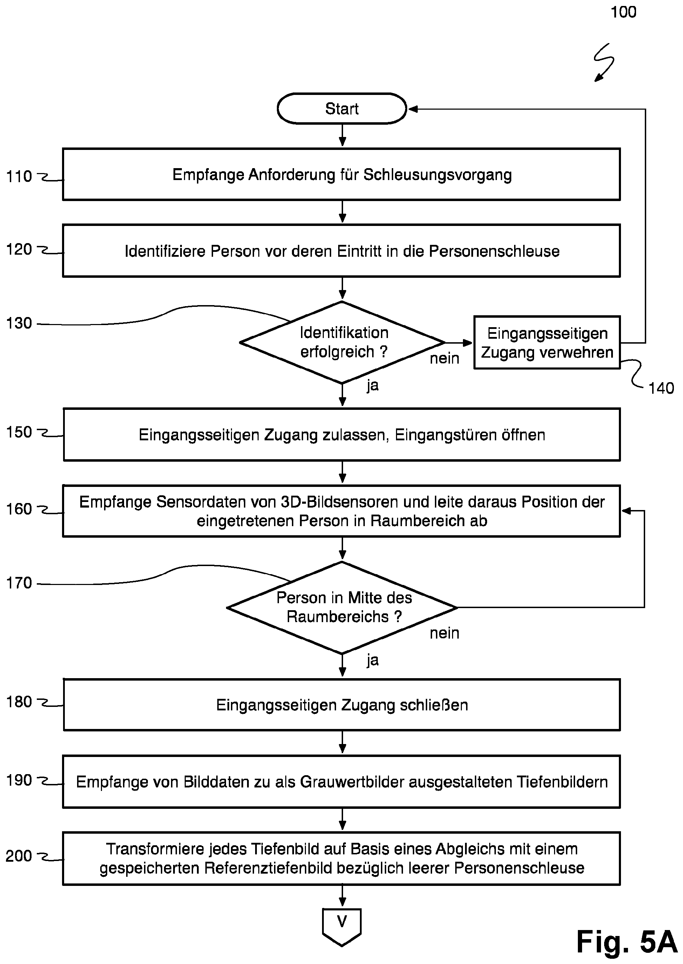

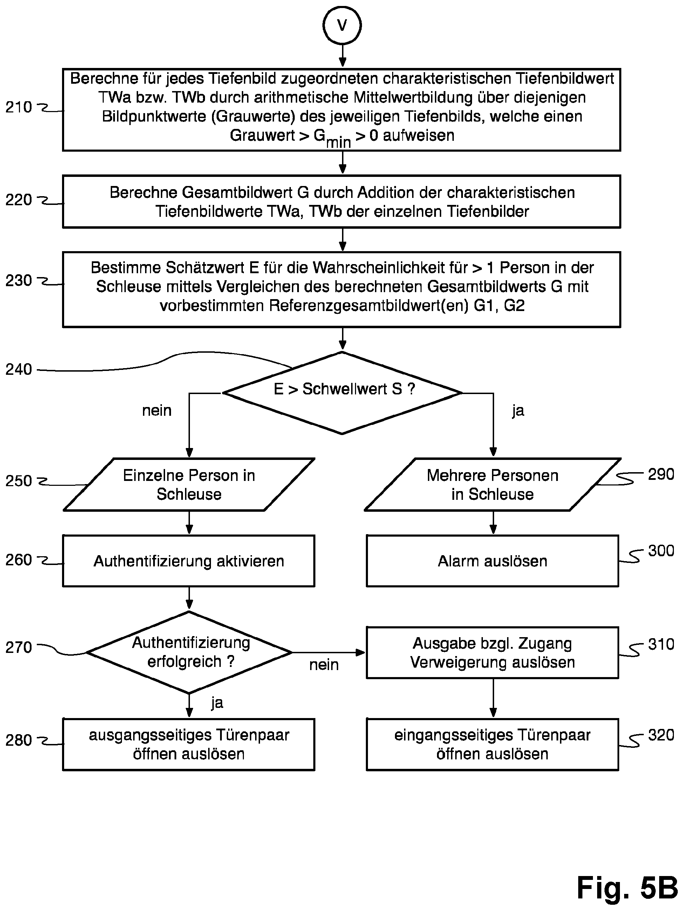

Die **Figuren 5A und 5B** stellen zusammen ein über den Verbinder "V" verknüpftes Flussdiagramm für ein beispielhaftes Verfahren 100 gemäß verschiedener hier miteinander kombinierter Ausführungsformen der Erfindung dar. Das Verfahren kann insbesondere durch das Überwachungssystem 13 der Personenschleuse 1 gemäß Fig. 3 ausgeführt werden und wird im Weiteren unter Bezugnahme auf diese beispielhafte Personenschleuse 1 erläutert.

Das Verfahren geht von einem Ausgangszustand der Personenschleuse 1 aus, bei der dessen beide Türenpaare 4 und 5 geschlossen sind und sich keine Person im Raumbereich 2 der Personenschleuse 1 befindet. Zum Zwecke der Erläuterung wird im Folgenden angenommen, dass die Personenschleuse 1 in der Durchgangsrichtung 6a passiert werden soll. In der Gegenrichtung gelten die nachfolgenden Erläuterungen jedoch entsprechend.

Der Schleusungsvorgang kann dadurch beginnen, dass eine Person P, welche die Personenschleuse 1 passieren will, den Steuerungsvorgang durch eine entsprechende vorbestimmte Handlung, insbesondere im äußeren Umfeld des, auf die jeweilige Durchgangsrichtung 6a bzw. 6b bezogen, eingangsseitigen Türenpaars 4 auslöst. Beispielsweise könnte dies dadurch geschehen, dass ein Schalter betätigt wird, oder die Person P so nah an das Türenpaar 4 von außerhalb der Personenschleuse 1 herantritt, dass diese Annäherung durch einen Annäherungssensor der Personenschleuse 1 erkannt wird. Wenn dementsprechend das Auslösen des Schleusungsvorgangs durch die Personenschleuse 1 erkannt wird, wird dies an das Überwachungssystem 13 als entsprechende Anforderung gemeldet, die in einem Schritt 110 am Überwachungssystem 13 empfangen wird.

In dem hier beschriebenen Ausführungsbeispiel weist die Personenschleuse 1 eine dem Raumbereich 2 und dem ihn begrenzenden Türenpaar 4 vorgelagerte Identifizierungsstation 14a, beispielsweise ein Ausweisleser oder Eingabebedienfeld für eine PIN auf, an der sich die Person P zunächst, gemäß diesen Beispielen mittels eines autorisierten Ausweises oder einer PIN, identifizieren muss. Im Schritt 120 wird vom Überwachungssystem 13 diese Identifikation mittels Abgleichs der an der Identifizierungsstation 14a erfassten Identifizierungsdaten mit einer Datenbank mitAutorisierungsdaten vorgenommen. Diese können entweder konkret bestimmte Personen bzw. ihnen zugeordnete Identifizierungsdaten als "autorisiert" oder "nicht autorisiert" einstufen, oder allgemeiner nur bestimmte Anforderungen stellen, etwa an die Art des Ausweises (z.B. Reisepass oder Personalausweis autorisiert, Führerschein oder Schülerausweis dagegen nicht autorisiert).

Scheitert diese Identifikation (130 - nein), so wird durch das Überwachungssystem 13 im Schritt 140 der eingangsseitige Zugang durch das Türenpaar 4 verwehrt. Dies kann insbesondere dadurch geschehen, dass eine entsprechende Ansteuerung zum Schlie-ßen bzw. geschlossen lassen des Türenpaares 4 erfolgt, oder aber allein dadurch, dass eine entsprechende Ansteuerung Öffnung des Türenpaares 4 unterbleibt. Andernfalls (130-ja) wird in einem Schritt 150 der eingangsseitige Zugang zugelassen und zu diesem Zweck das Türenpaar 4 so angesteuert, dass es sich öffnet.

Nun werden in einem Schritt 160 von den 3D-Bildsensoren 8a und 8b erzeugte Sensordaten, insbesondere Tiefenbilder, am Überwachungssystem 13 empfangen und daraus eine aktuelle Position der in den Raumbereich 2 der Personenschleuse 1 eingetretenen Person P abgeleitet. Dies kann insbesondere dadurch erfolgen, dass ein maximaler Grauwert in zumindest einen der Tiefenbilder identifiziert wird und in Abhängigkeit davon eine Entfernung der Person P vom jeweiligen Bildsensor 8a bzw. 8b bestimmt wird.

Mittels eines Vergleichs im Schritt 170 wird sodann festgestellt, ob die Person P gemäß ihrer gemäß Schritt 160 bestimmten Position bereits die Mitte bzw. virtuelle Mittellinie des Raumbereichs 2 erreicht oder durchschritten hat. Ist dies nicht der Fall (170 - nein), wird zum Schritt 160 zurückgekehrt, um weiterhin anhand der Sensordaten die jeweils aktuelle Position der Person P zu verfolgen. Andernfalls (170 - ja) wird im Schritt 180 das Schließen des eingangsseitigen Türenpaars 4 durch eine entsprechende Ansteuerung ausgelöst. Die Personenschleuse 1 ist somit nun allseitig geschlossen und die Vereinzelungsüberwachung beginnt.

Dazu werden im Schnitt 190 vom Überwachungssystem 13 Bilddaten empfangen, die von den beiden 3D-Bildsensoren 8a und 8b simultan in Form von als Grauwertbilder definierte Tiefenbilder erzeugt und geliefert werden. Vor der eigentlichen Auswertung dieser Tiefenbilder, werden sie jeweils im Schnitt 200 auf Basis eines Abgleichs mit einem jeweils dem entsprechenden 3D-Bildsensor 8a bzw. 8b zugeordneten gespeicherten Referenztiefenbild transformiert. Dieser Referenztiefenbilder wurden beispielsweise zuvor während einer Initialisierung der Personenschleuse 1, bei der sich kein Objekt, insbesondere keine Person, im Raumbereich 2 befand, durch den jeweiligen 3D-Bildsensor 8a bzw. 8b aufgenommen.

Im Rahmen des genannten Abgleichs können die Bildpunkte des entsprechenden Referenztiefenbilds R mit den entsprechenden Bildpunkten des im Schritt 190 empfangenen aktuellen Tiefenbildes B zum gleichen 3D-Bildsensor 8a bzw. 8b bezüglich ihres Bildpunktwertes (Grauwertes) verglichen werden. Insbesondere kann die Transformation so definiert sein, dass Bildpunkte mit den Bildpunktkoordinaten (i;j), bei denen der Bildpunktwert $B_{ij}$ des aktuellen Tiefenbilds mit dem entsprechenden Bildpunktwert $R_{ij}$ des entsprechenden Referenztiefenbilds zumindest innerhalb eines vorbestimmten Toleranzbereichs (erlaubte Grauwertdifferenz) übereinstimmt, im resultierenden Auswertetiefenbild A auf einen Extremwert, insbesondere minimalen Grauwert, z.B. "0", gesetzt werden. Dies kann wie folgt ausgedrückt werden:

$$A_{i,j} \equiv MAX\ (B_{i,j}\ ,\ R_{i,j}),\ \text{wenn } BK_{i,j} > R_{i,j,}$$

$$A_{i,j} \equiv 0 \text{ sonst}$$

Als Folge davon sind sodann die Bildbereiche im aktuellen Tiefenbild, welche ein oder mehrere im Raumbereich 2 vom entsprechenden 3D-Bildsensor 8a bzw. 8b erfasste Objekte, insbesondere eine oder mehrere Personen P bzw. P1 und P2, abbilden, gegenüber dem durch den Extremwert bestimmten Bildhintergrund abgehoben und somit anhand der entsprechenden Grauwertunterschiede besonders leicht identifizierbar, was die weitere Auswertung des Auswertetiefenbilds A erleichtert und die Auswertung insgesamt robuster macht (vgl. beispielhafte Grauwert-Tiefenbilder in **Fig. 4**)

Nun beginnt mit Schritt 210 die eigentliche Vereinzelungsüberwachung, bei der zunächst für jedes der Auswertetiefenbilder A ein zugeordneter charakteristischer Tiefenbildwert $TW_a$ bzw. $TW_b$ durch arithmetische Mittelwertbildung über sämtliche oder eine Auswahl der Bildpunktwerte (Grauwerte) des jeweiligen Tiefenbilds bestimmt wird. Optional kann dazu eine Bildwertschwelle $G_{min}$ als zusätzlicher Filter eingesetzt werden, sodass in die Mittelwertbildung nur diejenigen Bildpunktwerte $A_{ij}$ des Auswertebilds A einfließen, welche einen Bildpunktwert (Grauwert) $A_{ij} > G_{min} > 0$ aufweisen. Auf diese Weise kann mittels der Bildwerkschwelle $G_{min}$ eingestellt werden, welche Bildpunkte in die weitere Auswertung einfließen. Insbesondere sind somit im vorliegenden Beispiel die dem Bildhintergrund zugeordneten Bildpunkte mit ($A_{ij} = 0$) von der Mittelwertbildung ausgeschlossen. Des Weiteren kann optional die zumindest eine Untermenge zusätzlich in Abhängigkeit von der jeweiligen räumlichen Lage der Bildpunkte im zugehörigen Tiefenbild bestimmt werden, so dass etwa Bildpunkte in der Nähe des Rands des Auswertebildes ausgeschlossen werden können.

Die Mittelwertbildung kann im einfachen Fall der Mittelung über sämtliche Bildpunkte wie folgt ausgedrückt werden, wobei W und H die Anzahl der Bildpunkte in den zwei lateralen Dimensionen (Breite, Länge) des jeweiligen Auswertetiefenbilds A repräsentieren:

$$TW \equiv \frac{\sum_{i=1}^{W} \sum_{j=1}^{H} A_{i,j}}{W \cdot H}$$

Sodann werden im Schritt 220 die bestimmten Tiefenbildwert $TW_a$ und $TW_b$ zu einem Gesamtbildwert G gemäß einer vorbestimmten Kombinationsvorschrift kombiniert, die im vorliegenden Beispiel einer einfachen Addition $G = TW_a + TW_b$ entspricht.

Auf Basis des so bestimmten Gesamtbildwerts G wird nun ein Schätzwert E für die Wahrscheinlichkeit dafür, dass sich mehr als eine Person in der Personenschleuse befindet, mittels Vergleichen des Gesamtbildwerts die mit einem oder, wie im vorliegenden Beispiel, mehreren vorbestimmten Referenzgesamtbildwerten $G_1$, $G_2$ bestimmt. Die Referenzgesamtbildwerte $G_1$, $G_2$ können insbesondere so bestimmt sein, dass $G_1$ eine minimale Wahrscheinlichkeit, insbesondere 0 %, und $G_2$ eine maximale Wahrscheinlichkeit, insbesondere 100 %, angibt. Der Vergleich kann dann nach der folgenden Beziehung durchgeführt werden, um den Schätzwert E (in [%]) innerhalb eines Wahrscheinlichkeitsbereiches von 0 % bis 100 % zu bestimmen:

$$E \equiv MIN(100, MAX(0, ((G-G_1)/(G_2-G_1)) \cdot 100))$$

Dieser Schätzwert kann nun im Schritt 240 mit einem vorbestimmten Schwellwert S verglichen werden, um in Abhängigkeit vom Ergebnis dieses Vergleichs entweder festzustellen (240 - nein), dass sich nur eine einzelne Person P in der Personenschleuse 1 befindet (250) oder aber (240 -ja), dass sich eine Mehrzahl von Personen P1, P2 in der Personenschleuse 1 befindet (290). Im letztgenannten Fall 290 wird eine Alarmierung, etwa an der Personenschleuse 1 zugeordnetes Wachpersonal, ausgelöst, um zu signalisieren, dass ein (verbotener) Versuch stattgefunden hat, die Personenschleuse gleichzeitig mit einer Mehrzahl von Personen P1, P2 zu passieren.

Im Fall 250 wird dagegen im Schritt 260 durch das Überwachungssystem 13 die Authentifizierung durch entsprechende Ansteuerung der zur Durchlassrichtung 6a gehörenden Authentifizierungsvorrichtung 8a aktiviert. Verläuft die sich anschließende Authentifizierung erfolgreich (270 - ja) wird der Steuerungsvorgang im Schritt 280 durch Öffnen des ausgangsseitigen Türenpaars 5 mittels einer entsprechenden Ansteuerung durch das Überwachungssystem 13 abgeschlossen.

Andernfalls (270 - nein) wird der Schritt 310 an der entsprechenden Authentifizierungsvorrichtung 8a eine Benutzerkommunikation, insbesondere visuelle Anzeige und/oder akustische Signalisierung ausgegeben, welche die fehlgeschlagene Authentifizierung und somit die Verweigerung des durch die Personenschleuse 1 gesicherten Zugangs anzeigt. Zusätzlich kann eine weitere Signalisierung, etwa an Überwachungspersonal, ausgegeben werden. Des Weiteren wird im Schritt 320 das eingangsseitige Türenpaar 4 mittels einer entsprechenden Ansteuerung durch das Überwachungssystem 13 geöffnet, um der Person P das Verlassen der Personenschleuse 1 zu ermöglichen.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand abgewichen wird.

BEZUGSZEICHENLISTE

| | |
|---|---|
| 1 | Personenschleuse |
| 2 | überwachter Raumbereich innerhalb der Personenschleuse |
| 3a, 3b | Seitenwände der Personenschleuse |
| 4 | erstes, insbesondere eingangsseitiges Türenpaar |
| 5 | zweites, insbesondere ausgangsseitiges Türenpaar |
| 6 | Durchgangsrichtung im unidirektionalen Betrieb der Personenschleuse |
| 6a, 6b | Durchgangsrichtungen im bidirektionalen Betrieb der Personenschleuse |
| 7, 7a, 7b | Authentifizierungsvorrichtungen |
| 8a, 8b | 3D-Bildsensoren |
| 9a, 9b | zentrale Erfassungsrichtung des zugehörigen 3D-Bildsensors |
| 10a, 10b | Hauptinteraktionsrichtung der jeweils zugehörigen Authentifizierungsvorrichtung |
| 11a, 11b | Position, insbesondere Standfläche, der Person P bei ihrer Authentifizierung |
| 12a, 12b | Fußbodenleisten |
| 13 | Überwachungssystem |
| 13a | Prozessorplattform |
| 13b | Speicher |
| 14a, 14b | Identifizierungsstationen |
| | |
| P, P1, P2 | Person in Personenschleuse |
| K | Handkoffer |
| T | Trolley, Ziehkoffer |

**Patentansprüche**

1.  Computerimplementiertes Verfahren zur Überwachung eines Raumbereichs (2) in einer Personenschleuse (1), insbesondere zur Personenvereinzelungsüberwachung bezüglich des Raumbereichs (2), wobei das Verfahren aufweist:

    Empfangen (190) von Bilddaten, die eine Mehrzahl von simultan und von unterschiedlichen Positionen im Bereich der Personenschleuse (1) aus jeweils mittels eines zugehörigen an der entsprechenden Position angeordneten 3D-Bildsensors (8a, 8b) erfasste Tiefenbilder des Raumbereichs (2) repräsentieren, wobei jedes der Tiefenbilder für jeden seiner Bildpunkte anhand eines diesem zugeordneten Bildpunktwerts eine räumliche Entfernung des darauf abgebildeten Objektes oder Objektabschnitts vom zugehörigen 3D-Bildsensor (8a, 8b) angibt;
    Berechnen (210), für jedes der Tiefenbilder, eines dem jeweiligen Tiefenbild zugeordneten charakteristischen Tiefenbildwerts auf Basis sämtlicher Bildpunktwerte oder einer Untermenge der einzelnen Bildpunktwerte des jeweiligen Tiefenbildes, durch Anwendung eines Mittelungsverfahrens;
    Berechnen (220) eines Gesamtbildwerts durch Kombinieren der charakteristischen Tiefenbildwerte der verschiedenen Tiefenbilder gemäß einer vorbestimmten monotonen Kombinationsvorschrift, unter welcher eine Kombinationsvorschrift zur Bestimmung eines Ergebniswerts aus einer Mehrzahl von Eingangswerten, vorliegend speziell Tiefenbildwerten, zu verstehen ist, die in dem Sinne eine Monotonieeigenschaft aufweist, dass der Ergebniswert entweder (i) stets größer oder gleich jedem der Eingangswerte oder alternativ (ii) stets kleiner oder gleich jedem der Eingangswerte ist; und
    Bestimmen (230) eines Schätzergebnisses (E) für die Wahrscheinlichkeit, dass sich mehr als eine Person (P1, P2) in dem Raumbereich (2) befindet, in Abhängigkeit vom Ergebnis eines Vergleichs des Gesamtbildwerts mit zumindest einem vorbestimmten Referenzgesamtbildwert.

2.  Verfahren nach Anspruch 1, des Weiteren aufweisend:
    Auslösen (260, 300) einer Funktionalität der Personenschleuse (1) in Abhängigkeit von dem Schätzergebnis (E).

3.  Verfahren nach einem der vorausgehenden Ansprüche, wobei die Personenschleuse (1) als bidirektionale Durchgangsschleuse betreibbar ist und das Verfahren für jede der beiden Durchgangsrichtungen (6a, 6b) angewandt wird.

4.  Verfahren nach einem der vorausgehenden Ansprüche, wobei der Raumbereich (2) der Personenschleuse (1) zumindest an einer Seite mittels einer beweglichen Passierbeschränkung (4) abschließbar ist und das Verfahren des Weiteren aufweist:

Bestimmen (160) des Abstands eines in dem Raumbereich (2) befindlichen Objekts (P) anhand zumindest eines der Tiefenbilder und Auslösen (180) einer Öffnung oder Schließung der Passierbeschränkung in Abhängigkeit von dem bestimmten Abstand.

5. Verfahren nach einem der vorausgehenden Ansprüche, des Weiteren aufweisend:
Durchführen (200) einer Bildtransformation bezüglich zumindest einem der Tiefenbilder vor Berechnung seines jeweiligen charakteristischen Tiefenbildwerts, wobei das jeweilige Tiefenbild im Rahmen der Bildtransformation mit einem Referenztiefenbild gemäß einer vorbestimmten Transformationsvorschrift kombiniert wird, durch die Bildbereiche, bezüglich derer das jeweilige Tiefenbild und das Referenzbild im Hinblick auf ihre jeweiligen zueinander korrespondierenden Bildpunktwerte übereinstimmen, gegenüber anderen Bildbereichen, bei denen keine solche Übereinstimmung vorliegt, im jeweiligen Tiefenbild durch vorbestimmte Veränderung ihrer zugehörigen Bildwerte abgehoben werden.

6. Verfahren nach einem der vorausgehenden Ansprüche, wobei beim Berechnen (210) der charakteristischen Tiefenbildwerte, der Tiefenbildwert zumindest eines der Tiefenbilder auf Basis einer Untermenge der einzelnen Bildpunktwerte dieses Tiefenbildes berechnet wird, wobei die Bildpunkte der Untermengen auf Basis ihres jeweiligen Bildpunktwertes so ausgewählt werden, dass alle diese Bildpunkte jeweils einen Punktwert jenseits einer vorbestimmten Bildpunktwertschwelle oder innerhalb eines vorbestimmten Bildpunktwertbereichs aufweisen.

7. Verfahren nach Anspruch 6, wobei die zumindest eine Untermenge zusätzlich in Abhängigkeit von der jeweiligen räumlichen Lage der Bildpunkte im zugehörigen Tiefenbild bestimmt wird.

8. Überwachungssystem (13) zur Überwachung eines Raumbereichs (2) in einer Personenschleuse (1), insbesondere zur Personenvereinzelungsüberwachung, wobei das System eingerichtet ist, bezüglich der Personenschleuse (1) das Verfahren gemäß einem der vorausgehenden Ansprüche auszuführen.

9. Computerprogramm, aufweisend Anweisungen, die bei ihrer Ausführung auf einem oder mehreren Prozessoren des Überwachungssystems (13) nach Anspruch 8, dieses veranlassen, das Verfahren gemäß einem der Ansprüche 1 bis 7 auszuführen.

10. Personenschleuse (1), aufweisend:

ein Überwachungssystem (13) gemäß Anspruch 8 zur Überwachung eines Raumbereichs (2) der Personenschleuse (1), insbesondere zur Personenvereinzelungsüberwachung; und
eine Mehrzahl von 3D-Bildsensoren (8a, 8b) die an unterschiedlichen Positionen im Bereich der Personenschleuse (1) angeordnet sind, wobei die 3D-Bildsensoren (8a, 8b) jeweils eingerichtet sind, ein zugehöriges Tiefenbild des Raumbereichs (2) zu erzeugen und an das Überwachungssystem (13) zu liefern, wobei das jeweilige Tiefenbild für jeden seiner Bildpunkte anhand eines diesem zugeordneten Bildpunktwerts die Entfernung des darauf abgebildeten Objektes oder Objektabschnitts vom zugehörigen 3D-Bildsensor (8a, 8b) angibt.

11. Personenschleuse (1) nach Anspruch 10, wobei zwei der 3D-Bildsensoren (8a, 8b) zur Anordnung an einander gegenüberliegenden Seiten des Raumbereichs (2) angeordnet sind, um diesen aus, zumindest im Wesentlichen, entgegengesetzt zueinander verlaufenden zentrale Erfassungsrichtungen (9a, 9b) bildsensorisch zu erfassen.

12. Personenschleuse (1) nach Anspruch 11, wobei die zwei einander gegenüberliegenden 3D-Bildsensoren (8a, 8b) so bezüglich des Raumbereichs (2) angeordnet sind, dass die Projektion ihrer zentralen Erfassungsrichtungen (9a, 9b) auf eine definierte und bezüglich der Personenschleuse (1) horizontal verlaufenden virtuelle Ebene eine auf dieselbe Ebene projizierte, durch die Geometrie der Personenschleuse (1) festgelegten Durchgangsrichtung (6; 6a, 6b) in einem von Null verschiedenen Winkel schneidet, so dass die zentralen zentrale Erfassungsrichtungen (9a, 9b) der zwei 3D-Bildsensoren (8a, 8b) jeweils schräg zur Durchgangsrichtung (6; 6a, 6b) verlaufen.

13. Personenschleuse (1) nach Anspruch 12, des Weiteren aufweisend eine nur über den Raumbereich (2) zugängliche Authentifizierungsvorrichtung (7) zur Authentifizierung einer in der Personenschleuse (1) anwesenden Person (P);

wobei die Authentifizierungsvorrichtung eine Benutzerschnittstelle mit einer ausgezeichneten Hauptinteraktionsrichtung (10a, 10b) für die Interaktion zwischen der Benutzerschnittstelle und einem Benutzer derselben aufweist; und

die Benutzerschnittstelle so bezüglich des Raumbereichs (2) angeordnet ist, dass ihre auf die horizontale virtuelle Ebene projizierte Hauptinteraktionsrichtung (10a, 10b) in einem von Null verschiedenen Winkel zur Projektion der jeweiligen zentralen Erfassungsrichtung (9a, 9b) der zwei einander gegenüberliegenden 3D-Bildsensoren (8a, 8b) verläuft.

14. Personenschleuse (1) nach Anspruch 13, wobei die Anordnung der zumindest einen Authentifizierungsvorrichtung (7) bezüglich des Raumbereichs (2) im Hinblick auf ihre Lage oder Orientierung oder beide rekonfigurierbar ausgestaltet ist.

15. Personenschleuse (1) nach Anspruch 13 oder 14 wobei die Authentifizierungsvorrichtung (7) bzw. zumindest eine der Authentifizierungsvorrichtungen (7a, 7b) unmittelbar oder mittelbar an einer Fußbodenleiste (12a, 12b) im Raumbereich (2) der Personenschleuse (1) angebracht ist.

16. Personenschleuse (1) nach Anspruch 13 bis 15, wobei die Authentifizierungsvorrichtung (7) bzw. zumindest eine der Authentifizierungsvorrichtungen (7a, 7b) bezüglich des Verlaufs der zugehörigen Durchgangsrichtung (6; 6a, 6b) durch die Personenschleuse (1) jenseits der Mitte des Raumbereichs (2) angeordnet ist.

17. Personenschleuse (1) nach einem der Ansprüche 10 bis 16, wobei die 3D-Bildsensoren (8a, 8b) jeweils an einer zugeordneten seitlich im Umfeld des Raumbereichs (2) vorgesehenen Stützstruktur (3a, 3b) der Personenschleuse (1) angeordnet sind.

**Claims**

1. A computer-implemented method for monitoring a spatial area (2) in a personnel interlock (1), in particular for monitoring the separation of persons with respect to the spatial area (2), the method comprising:

   receiving (190) image data representing a plurality of depth images of the spatial area (2), which are acquired simultaneously and from different positions in the area of the personnel interlock (1), each by means of a respective 3D image sensor (8a, 8b) arranged at the respective position, wherein each of the depth images indicates, for each of its pixels, a spatial distance of the object or object portion depicted thereon from the respective 3D image sensor (8a, 8b) based on a pixel value assigned thereto;
   calculating (210), for each of the depth images, a characteristic depth image value associated with the respective depth image based on all of the individual pixel values or a subset of the individual pixel values of the respective depth image, using an averaging method;
   calculating (220) a total image value by combining the characteristic depth image values of the various depth images according to a predetermined monotonic combination rule, wherein a combination rule is to be understood as a rule for determining a result value from a plurality of input values, specifically depth image values in the present case, which has a monotonicity property in the sense that the result value is either (i) always greater than or equal to each of the input values or, alternatively, (ii) always less than or equal to each of the input values; and
   determining (230) an estimation result (E) for the probability that more than one person (P1, P2) is present in the spatial area (2), depending on the result of a comparison of the total image value with at least one predetermined reference total image value.

2. The method according to claim 1, further comprising:
   triggering (260, 300) a functionality of the personnel interlock (1) depending on the estimation result (E).

3. The method according to any one of the preceding claims, wherein the personnel interlock (1) is operable as a bidirectional passage interlock and the method is applied for each of the two directions of passage (6a, 6b).

4. The method according to any one of the preceding claims, wherein the spatial area (2) of the personnel interlock (1) can be closed off on at least one side by means of a movable restriction of passage (4), and the method further comprises: determining (160) the distance of an object (P) located in the spatial area (2) based on at least one of the depth images and triggering (180) an opening or a closing of the restriction of passage depending on the determined distance.

5. The method according to any one of the preceding claims, further comprising:

carrying out (200) an image transformation with respect to at least one of the depth images prior to calculating its respective characteristic depth image value, wherein the respective depth image is combined with a reference depth image in accordance with a predetermined transformation rule, by means of which image regions in the respective depth image that match the reference image with respect to their mutually corresponding pixel values are emphasized over other regions in which no such match is present, by a predetermined modification of their associated image values.

6. The method according to any one of the preceding claims, wherein, when calculating (210) the characteristic depth image values, the depth image value of at least one of the depth images is calculated based on a subset of the individual pixel values of this depth image, wherein the pixels of the subset are selected based on their respective pixel value such that all of these pixels have a pixel value either beyond a predetermined pixel value threshold or within a predetermined pixel value range.

7. The method according to claim 6, wherein the at least one subset is additionally determined based on the respective spatial location of the pixels in the respective depth image.

8. A monitoring system (13) for monitoring a spatial area (2) in a personnel interlock (1), in particular for monitoring the separation of persons, wherein the system is configured to carry out, with respect to the personnel interlock (1), the method according to any one of the preceding claims.

9. A computer program comprising instructions which, when executed on one or more processors of the monitoring system (13) according to claim 8, cause the system to carry out the method according to any one of claims 1 to 7.

10. A personnel interlock (1), comprising:

a monitoring system (13) according to claim 8 for monitoring a spatial area (2) of the personnel interlock (1), in particular for monitoring the separation of persons; and
a plurality of 3D image sensors (8a, 8b) arranged at different positions in the area of the personnel interlock (1), wherein each 3D image sensor (8a, 8b) is configured to generate a respective depth image of the spatial area (2) and to supply it to the monitoring system (13), wherein the respective depth image indicates, for each of its pixels, based on a pixel value assigned thereto, the distance of the object or portion of the object depicted thereon from the respective 3D image sensor (8a, 8b).

11. The personnel interlock (1) according to claim 10, wherein two of the 3D image sensors (8a, 8b) are arranged on opposite sides of the spatial area (2) to capture the spatial area (2) in an image-based manner from central detection directions (9a, 9b) which run at least substantially in opposite directions.

12. The personnel interlock (1) according to claim 11, wherein the two opposite 3D image sensors (8a, 8b) are arranged with respect to the spatial area (2) such that the projection of their central detection directions (9a, 9b) onto a defined virtual plane extending horizontally with respect to the personnel interlock (1) intersects a direction of passage (6; 6a, 6b), which is defined by the geometry of the personnel interlock (1) and projected onto the same plane, at an angle different from zero, so that the central detection directions (9a, 9b) of the two 3D image sensors (8a, 8b) each extend obliquely to the direction of passage (6; 6a, 6b).

13. The personnel interlock (1) according to claim 12, further comprising at least one authentication device (7) accessible only via the spatial area (2) for authenticating a person (P) present in the personnel interlock (1);

wherein the authentication device comprises a user interface with a designated main direction of interaction (10a, 10b) for interaction between the user interface and a user thereof; and
wherein the user interface is arranged with respect to the spatial area (2) such that its main direction of interaction (10a, 10b), projected onto the horizontal virtual plane, intersects the projection of the respective central detection direction (9a, 9b) of the two opposite 3D image sensors (8a, 8b) at an angle different from zero.

14. The personnel interlock (1) according to claim 13, wherein the arrangement of the at least one authentication device (7) with respect to the spatial area (2) is reconfigurable in terms of its position or orientation, or both.

15. The personnel interlock (1) according to claim 13 or 14, wherein the authentication device (7), or at least one of the authentication devices (7a, 7b), is directly or indirectly attached to a baseboard (12a, 12b) in the spatial area (2) of the personnel interlock (1).

16. The personnel interlock (1) according to any one of claims 13 to 15, wherein the authentication device (7), or at least one of the authentication devices (7a, 7b), is arranged beyond the center of the spatial area (2) with respect to the course of the associated direction of passage (6; 6a, 6b) through the personnel interlock (1).

17. The personnel interlock (1) according to any one of claims 10 to 16, wherein each of the 3D image sensors (8a, 8b) is arranged on a respective support structure (3a, 3b) of the personnel interlock (1) provided laterally in the vicinity of the spatial area (2).

## Revendications

1. Procédé mis en œuvre par ordinateur pour la surveillance d'une zone spatiale (2) dans un sas pour personnes (1), en particulier de surveillance de séparation de personnes par rapport à la zone spatiale (2), dans lequel le procédé présente :

la réception (190) de données d'images qui représentent une pluralité d'images de profondeur de la zone spatiale (2) acquises simultanément et à partir de différentes positions dans la zone du sas pour personnes (1) à partir de chacune d'elles au moyen d'un capteur d'image 3D (8a, 8b) correspondant disposé à la position correspondante, dans lequel chacune des images de profondeur indique, pour chacun de ses points d'image sur la base d'une valeur de point d'image associée à celle-ci, un éloignement spatial de l'objet ou de la section d'objet reproduit(e) sur celui-ci par rapport au capteur d'image 3D (8a, 8b) correspondant ; le calcul (210), pour chacune des images de profondeur, d'une valeur d'image de profondeur caractéristique associée à l'image de profondeur respective sur la base de toutes les valeurs de point d'image ou d'un sous-ensemble des valeurs de point d'image individuelles de l'image de profondeur respective, par application d'un procédé de calcul de moyenne ;
le calcul (220) d'une valeur d'image totale par combinaison des valeurs d'image de profondeur caractéristiques des différentes images de profondeur selon une prescription de combinaison monotone prédéterminée, par laquelle on entend une prescription de combinaison pour déterminer une valeur de résultat à partir d'une pluralité de valeurs d'entrée, en particulier des valeurs d'image de profondeur, qui présente une propriété de monotonie dans le sens où la valeur de résultat soit (i) est toujours supérieure ou égale à chacune des valeurs d'entrée ou alternativement (ii) est toujours inférieure ou égale à chacune des valeurs d'entrée, et
la détermination (230) d'un résultat d'estimation (E) de la probabilité qu'il y ait plus d'une personne (P1, P2) dans la zone spatiale (2), en fonction du résultat d'une comparaison de la valeur d'image totale avec au moins une valeur d'image totale de référence prédéterminée.

2. Procédé selon la revendication 1, présentant en outre : le déclenchement (260, 300) d'une fonctionnalité du sas pour personnes (1) en fonction du résultat d'estimation (E) .

3. Procédé selon l'une quelconque des revendications précédentes, dans lequel le sas pour personnes (1) peut fonctionner en tant que sas pour personnes bidirectionnel et le procédé est appliqué pour chacune des deux directions de traversée (6a, 6b).

4. Procédé selon l'une quelconque des revendications précédentes, dans lequel la zone spatiale (2) du sas pour personnes (1) est verrouillable au moins d'un côté au moyen d'une restriction de passage mobile (4) et le procédé présente en outre :
la détermination (160) de la distance d'un objet (P) situé dans la zone spatiale (2) à l'aide d'au moins l'une des images de profondeur et le déclenchement (180) d'une ouverture ou fermeture de la restriction de passage en fonction de la distance déterminée.

5. Procédé selon l'une quelconque des revendications précédentes, présentant en outre :
la réalisation (200) d'une transformation d'image par rapport à au moins l'une des images de profondeur avant le calcul de sa valeur d'image de profondeur caractéristique respective, dans lequel l'image de profondeur respective est combinée avec une image de profondeur de référence dans le cadre de la transformation d'image selon une prescription de transformation prédéterminée, par laquelle des zones d'image, par rapport auxquelles l'image de profondeur respective et l'image de référence concordent en ce qui concerne leurs valeurs de point d'image mutuellement en correspondance respectives, sont mises en évidence par rapport à d'autres zones d'image, pour lesquelles il n'existe pas de telle concordance dans l'image de profondeur respective par une modification prédéterminée de leurs valeurs d'image correspondantes.

6. Procédé selon l'une quelconque des revendications précédentes, dans lequel lors du calcul (210) des valeurs d'image de profondeur caractéristiques, la valeur d'image de profondeur d'au moins une des images de profondeur est calculée sur la base d'un sous-ensemble des valeurs de point d'images individuels de cette image de profondeur, dans lequel les point d'images des sous-ensembles sont ainsi sélectionnés sur la base de leur valeur de point d'image respective, de sorte que tous ces point d'images présentent chacun une valeur de point au-delà d'un seuil de valeur de point d'image prédéterminé ou à l'intérieur d'une plage de valeur de point d'image prédéterminée.

7. Procédé selon la revendication 6, dans lequel l'au moins un sous-ensemble est en outre déterminé en fonction de la position spatiale respective des points d'image dans l'image de profondeur correspondante.

8. Système de surveillance (13) pour la surveillance d'une zone spatiale (2) dans un sas pour personnes (1), en particulier pour la surveillance de la séparation de personnes, dans lequel le système est configuré pour exécuter, par rapport au sas pour personnes (1), le procédé selon l'une quelconque des revendications précédentes.

9. Programme informatique présentant des instructions qui, lorsqu'elles sont exécutées sur un ou plusieurs processeurs du système de surveillance (13) selon la revendication 8, amènent celui-ci à exécuter le procédé selon l'une quelconque des revendications 1 à 7.

10. Sas pour personnes (1), présentant :

un système de surveillance (13) selon la revendication 8 pour la surveillance d'une zone spatiale (2) du sas pour personnes (1), en particulier pour la surveillance de la séparation de personnes ; et
une pluralité de capteurs d'image 3D (8a, 8b) qui sont disposés à différentes positions dans la zone du sas pour personnes (1), dans lequel les capteurs d'image 3D (8a, 8b) sont chacun configurés pour générer une image de profondeur correspondante de la zone spatiale (2) et pour la fournir au système de surveillance (13), dans lequel l'image de profondeur respective pour chacun de ses points d'image sur la base d'une valeur de point d'image associée à celle-ci indique l'éloignement de l'objet ou de la section d'objet reproduit(e) sur celui-ci par rapport au capteur d'image 3D (8a, 8b) correspondant.

11. Sas pour personnes (1) selon la revendication 10, dans lequel deux des capteurs d'image 3D (8a, 8b) sont disposés pour être disposés sur les côtés de la zone spatiale (2) opposés l'un à l'autre afin d'acquérir celle-ci par capteurs d'image à partir de directions d'acquisition centrales (9a, 9b) s'étendant de manière opposée l'une à l'autre, au moins sensiblement.

12. Sas pour personnes (1) selon la revendication 11, dans lequel les deux capteurs d'image 3D (8a, 8b) opposés l'un à l'autre sont disposés par rapport à la zone spatiale (2) de sorte que la projection de leurs directions d'acquisition centrales (9a, 9b) sur un plan virtuel défini et s'étendant horizontalement par rapport au sas pour personnes (1) coupe une direction de traversée (6 ; 6a, 6b) déterminée par la géométrie du sas pour personnes (1) projetée sur le même plan selon un angle différent de zéro, de sorte que les directions d'acquisition centrales (9a, 9b) des deux capteurs d'image 3D (8a, 8b) s'étendent respectivement de manière oblique par rapport à la direction de traversée (6 ; 6a, 6b).

13. Sas pour personnes (1) selon la revendication 12, présentant en outre un dispositif d'authentification (7) accessible uniquement via la zone spatiale (2) pour l'authentification d'une personne (P) présente dans le sas pour personnes (1) ;

dans lequel le dispositif d'authentification présente une interface utilisateur avec une excellente direction d'interaction principale (10a, 10b) pour l'interaction entre l'interface utilisateur et un utilisateur de celle-ci ; et
l'interface utilisateur est disposée par rapport à la zone spatiale (2) de sorte que sa direction d'interaction principale (10a, 10b) projetée sur le plan virtuel horizontal s'étend selon un angle différent de zéro par rapport à la projection de la direction d'acquisition centrale (9a, 9b) respective des deux capteurs d'image 3D (8a, 8b) opposés l'un à l'autre.

14. Sas pour personnes (1) selon la revendication 13, dans lequel l'agencement de l'au moins un dispositif d'authentification (7) est conçu de manière reconfigurable par rapport à la zone spatiale (2) en ce qui concerne sa position ou son orientation, ou les deux.

**15.** Sas pour personnes (1) selon la revendication 13 ou 14, dans lequel le dispositif d'authentification (7) ou au moins l'un des dispositifs d'authentification (7a, 7b) est monté directement ou indirectement sur une baguette de plancher (12a, 12b) dans la zone spatiale (2) du sas pour personnes (1).

**16.** Sas pour personnes (1) selon les revendications 13 à 15, dans lequel le dispositif d'authentification (7) ou au moins l'un des dispositifs d'authentification (7a, 7b) est disposé par rapport au tracé de la direction de traversée (6 ; 6a, 6b) correspondante à travers le sas pour personnes (1) au-delà du milieu de la zone spatiale (2).

**17.** Sas pour personnes (1) selon l'une quelconque des revendications 10 à 16, dans lequel les capteurs d'image 3D (8a, 8b) sont disposés respectivement sur une structure de support (3a, 3b) du sas pour personnes (1) associée prévue latéralement dans l'environnement de la zone spatiale (2).

**(a)**

**(b)**

# Fig. 1

(a)

(b)

(c)

**Fig. 2**

(a)

(b)

Fig. 3

(a)

(b)

Fig. 4

100

Start

110 — Empfange Anforderung für Schleusungsvorgang

120 — Identifiziere Person vor deren Eintritt in die Personenschleuse

130 — Identifikation erfolgreich ?

nein → Eingangsseitigen Zugang verwehren — 140

ja

150 — Eingangsseitigen Zugang zulassen, Eingangstüren öffnen

160 — Empfange Sensordaten von 3D-Bildsensoren und leite daraus Position der eingetretenen Person in Raumbereich ab

170 — Person in Mitte des Raumbereichs ?

nein

ja

180 — Eingangsseitigen Zugang schließen

190 — Empfange von Bilddaten zu als Grauwertbilder ausgestalteten Tiefenbildern

200 — Transformiere jedes Tiefenbild auf Basis eines Abgleichs mit einem gespeicherten Referenztiefenbild bezüglich leerer Personenschleuse

V

## Fig. 5A

(V)

**210** — Berechne für jedes Tiefenbild zugeordneten charakteristischen Tiefenbildwert TWa bzw. TWb durch arithmetische Mittelwertbildung über diejenigen Bildpunktwerte (Grauwerte) des jeweiligen Tiefenbilds, welche einen Grauwert $> G_{min} > 0$ aufweisen

**220** — Berechne Gesamtbildwert G durch Addition der charakteristischen Tiefenbildwerte TWa, TWb der einzelnen Tiefenbilder

**230** — Bestimme Schätzwert E für die Wahrscheinlichkeit für $> 1$ Person in der Schleuse mittels Vergleichen des berechneten Gesamtbildwerts G mit vorbestimmten Referenzgesamtbildwert(en) G1, G2

**240** — E > Schwellwert S ?

nein      ja

**250** — Einzelne Person in Schleuse

Mehrere Personen in Schleuse — **290**

**260** — Authentifizierung aktivieren

Alarm auslösen — **300**

**270** — Authentifizierung erfolgreich ?

nein

Ausgabe bzgl. Zugang Verweigerung auslösen — **310**

ja

**280** — ausgangsseitiges Türenpaar öffnen auslösen

eingangsseitiges Türenpaar öffnen auslösen — **320**

# Fig. 5B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- UNICITY: A depth maps database for people detection in security airlocks. **DUMOULIN JOEL et al.** 2018 15TH IEEE INTERNATIONAL CONFERENCE ON ADVANCED VIDEO AND SIGNAL BASED SURVEILLANCE (AVSS). IEEE, 27 November 2018, 1-6